(19)

**Europäisches Patentamt**
**European Patent Office**
**Office européen des brevets**

(11) **EP 4 578 602 A2**

(12) **EUROPEAN PATENT APPLICATION**
published in accordance with Art. 153(4) EPC

(43) Date of publication:
**02.07.2025 Bulletin 2025/27**

(21) Application number: **23857765.4**

(22) Date of filing: **24.08.2023**

(51) International Patent Classification (IPC):
**B25J 9/00** (2006.01)    **B25J 13/06** (2006.01)
**B25J 9/10** (2006.01)    **B25J 13/02** (2006.01)
**B25J 13/08** (2006.01)

(52) Cooperative Patent Classification (CPC):
**B25J 9/00; B25J 9/10; B25J 13/02; B25J 13/06;
B25J 13/08**

(86) International application number:
**PCT/KR2023/012603**

(87) International publication number:
**WO 2024/043733 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.08.2022 KR 20220106729
29.03.2023 KR 20230041120**

(71) Applicant: **Wirobotics Inc.
Cheonan-si, Chungcheongnam-do 31253 (KR)**

(72) Inventors:
• **CHOI, Byung June
Yongin-si, Gyeonggi-do 16856 (KR)**

• **KIM, Yongjae
Cheonan-si, Chungcheongnam-do 31166 (KR)**
• **LEE, Younbaek
Yongin-si, Gyeonggi-do 17103 (KR)**
• **ROH, Changhyun
Seongnam-si, Gyeonggi-do 13540 (KR)**
• **LIM, Bokman
Hwaseong-si, Gyeonggi-do 18444 (KR)**
• **LEE, Jewoo
Seoul 08758 (KR)**

(74) Representative: **HGF
HGF Europe LLP
Neumarkter Straße 18
81673 München (DE)**

(54) **WEARABLE ROBOT FOR ASSISTING BACK MUSCLE STRENGTH, OR DEVICE FOR MANIPULATING WEARABLE ROBOT**

(57) The present invention relates to a wearable robot for assisting back muscle strength, comprising: an upper wearing part worn on the upper body; a back muscle strength assisting part that can be fixed to the upper wearing part; and a lower wearing part connected to a lower end portion of the back muscle strength assisting part, wherein the back muscle strength assisting part comprises a housing that can be fixed to the upper wearing part, a plurality of elastic members arranged in series or parallel within the housing, a moving part connected to the bottom of the elastic members and connected to the lower wearing part so as to slide up and down, and a rigidity control part that adjusts the rigidity of the elastic members.

[Figure 3]

EP 4 578 602 A2

## Description

[Technical field]

The present invention relates to a wearable robot that assists waist muscular strength and a manipulation device thereof.

[Background Art]

Although a wearable robot market shows a high growth rate, especially in the areas of assistance and rehabilitation for the elderly, a demand for robots to improve productivity in industrial sites is increasing significantly.
Interest in wearable robots and practical applications of the wearable robots are spreading to industries such as logistics, construction, manufacturing, and services for the purpose of preventing musculoskeletal disorders, reducing fatigue, and improving productivity.
In particular, the wearable robots are a technology that is likely to spread throughout the industry due to positive effects such as enabling flexible response to work environments in industrial sites, increasing productivity, and reducing worker risk and fatigue. For example, world-famous automobile companies such as Ford in the United States, BMW and Audi in Germany, and Renault in France are proactively applying wearable robots to their automobile production lines.
As such, the wearable robots for industrial sites and daily life assistance are highly interested and in demand. On the other hand, the high price, heavy weight, and uncomfortable fit of developed wearable robots are acting as obstacles to their popularization and are not widely available.
Therefore, there is a need to overcome the limitations of popularizing wearable robots such as high prices, heavy and complex systems, and uncomfortable fit, and to develop simple/light wearable robots with low prices, light and simple systems, and comfortable fit.
Additionally, in logistics, distribution, construction, and manufacturing work, assistance is needed for specific areas such as arms, shoulders, and a waist. In order to make it light and comfortable and reduce production costs, it is important to reduce a proportion of a rigid frame and come up with a way to effectively support specific body parts with a simple structure having flexible characteristics.
In order for wearable robots to reach the commercialization stage, due to issues such as product cost, weight reduction, and efficiency, it must be developed as a wearable robot that assists only the core necessary joints/parts, rather than a full-body version of a wearable robot that assists all joints. In particular, in the case of work-assisted wearable robots, unless heavy objects are handled, passive mechanisms such as small actuators or springs may be applied to assist in the work of light/medium-heavy objects in logistics, manufacturing, and construction sites, etc., thereby reducing weight. It is possible to implement a system with excellent long-term wearability.
In addition, it is necessary to adjust a magnitude of the supporting force according to the work environment, and the supporting force may be transmitted more efficiently by limiting a range of motion in which the supporting force may be transmitted by the wearable robot.
Accordingly, the present invention proposes a lightweight work assistance robot that may be worn for a long time by applying a small actuator or passive mechanism and a mechanical locking function.

[Disclosure]

[Technical Problem]

The present invention provides a wearable robot that assists waist muscular strength and is capable of adjusting stiffness in order to solve the above-described conventional problems.
The problems to be solved by the present invention are not limited to the problems mentioned above, and other problems not mentioned will be clearly understood by those skilled in the art from the description below.

[Technical Solution]

This disclosure includes a wearable robot that assists waist muscular strength, comprising: an upper wearing unit worn on an upper body; a waist muscular strength assisting unit fixable to the upper wearing unit; and a lower wearing unit connected to the waist muscular strength assisting unit, wherein the waist muscular strength assisting unit comprises: a housing fixable to the upper wearing unit; a plurality of elastic members disposed in series or in parallel within the housing; a moving part connected to a lower portion of the elastic member and connected to the lower wearing unit to slide up and down; and a stiffness adjustment unit configured to adjust stiffness of the elastic member.
This disclosure includes the wearable robot further comprising a clutch unit configured to limit a downward movement range of the moving part, wherein the clutch unit comprises: a wire extending in upper left and right directions by winding the moving part horizontally; a first fixing unit configured to fix one end of the wire; and a second fixing unit configured to wind and fix the other end of the wire in a circumferential direction and in which a reel spring is mounted on a rotation axis to rotate elastically.

This disclosure includes the wearable robot wherein the plurality of elastic members of the waist muscular strength assisting unit comprise a first elastic member and a second elastic member, wherein an upper end of the first elastic member is fixed to the housing, a lower end of the first elastic member is fixed to the slider, an upper end of the second elastic member is fixed to the slider; and a lower end of the second elastic member is fixed to the moving part.

This disclosure includes the wearable robot wherein the second elastic member has an elastic modulus value greater than that of the first elastic member.

This disclosure includes the wearable robot wherein a catching protrusion is formed on a top surface of the slider in a movement direction of the slider, and the stiffness adjustment unit further comprises: a sliding cam that moves horizontally from above the slider in the movement direction of the slider; and a locking part configured to restrict or allow a movement of the slider by bringing into contact with or releasing contact with the catching protrusion depending on whether the locking part is brought into contact with the sliding cam when the sliding cam moves.

This disclosure includes the wearable robot wherein the stiffness adjustment unit further comprises: a cable connected to the slider; and a manipulation device configured to move the slider by pulling or releasing the cable.

This disclosure includes the wearable robot wherein the clutch manipulation unit comprises: a gear train part in which gears are formed in the circumferential direction of the second fixing unit; and a ratchet gear engaged with or disengaging from the gears of the gear train part by constraining or allowing a rotation of the second fixing unit.

This disclosure includes the wearable robot wherein the clutch operating unit further comprises: a cable connected to the ratchet gear; and a manipulation device configured to move the ratchet gear by pulling or releasing the cable.

This disclosure includes the wearable robot wherein a reel spring is mounted to a rotation axis of the first fixing unit so that the first fixing unit elastically rotates, and the reel spring mounted to the first fixing unit has an elastic modulus value less than that of the reel spring mounted to the second fixing unit.

This disclosure includes the wearable robot further comprising a posture recognition sensor built into the waist muscular strength assisting unit to measure one or more of a waist bending angle, a waist twisting angle, or a waist lowering angle of the wearer of the wearable robot.

This disclosure includes the wearable robot wherein the posture recognition sensor is connected to a user device or a communication network by wire or wirelessly and transmits one or more of the measured waist bending angle, waist twisting angle, or waist lowering angle to a server.

This disclosure includes a manipulation device housing; a plurality of first cables connected to the upper portion of the first manipulation and the other end fixed to the upper portion of the manipulation device housing; a second cable connected to the upper portion of the second manipulation and the other end fixed to the housing of the manipulation device; a stiffness control button capable of pulling or releasing the pull of the plurality of first cables connected to the upper portion of the first manipulation; and a clutch operation button capable of pulling or releasing the second cable connected to the upper portion of the second manipulation; wherein the stiffness control button includes a wearable robot operation device that assists the lower back strength to operate the upper portion of the first manipulation and the upper portion of the second manipulation, including a pressing portion for pressing the first cable.

This disclosure includes a wearable robot operating device that assists the waist strength of the first operation target and the second operation target, wherein the manipulation device housing includes an upper support portion and a lower support portion spaced apart from each other in the longitudinal direction of the plurality of first cables with the pressing portion between the other side of the plurality of first cables.

This disclosure includes a wearable robot operating device for assisting waist strength, in which the stiffness control button operates the first operation object and the second operation object capable of simultaneously pressing at least one of a plurality of first cables.

This disclosure further includes a connecting bar hook, and the connecting bar hook includes a wearable robot operating device that assists waist strength to operate the first operation target and the second operation target that can constrain the position of the rigidity control button at a position where the rigidity control button moves in the direction of pressing the first cable.

This disclosure includes a wearable robot operating device that assists waist strength, which operates the first operation target and the second operation target, which are integrally connected to the connection bar, and is integrally formed with the connection bar.

This disclosure further includes an operation lever that can slide in a direction parallel to the length direction of the second cable, and includes an operation device of a wearable robot that assists waist strength to operate the first operation object and the second operation object that can restrain the position of the operation lever at a position where the operation lever moves in the direction of pulling the second cable.

In this disclosure, the clutch operation button includes a wearable robot operating device for assisting waist strength, which further includes a clutch operation button hook capable of restricting the position of the operation lever at a position where the operation lever moves in the direction of pulling the second cable.

The disclosure includes a wearable robot operating device for assisting waist strength, which further includes a release button for moving the clutch operation button hook in a direction of releasing the operation lever.

The disclosure includes receiving information on the wearer's risk of back injury from a posture recognition sensor built into the wearable robot, including a bent waist angle, a twisted waist angle, and a bent waist angle; generating information on the wearer's risk of back injury based on the received information; generating a user interface representing visualization of the generated information; and displaying the generated user interface.

The disclosure includes a method of providing a user interface indicating information on the risk of waist injury of a wearer of a wearable robot assisting waist strength, including visualizing and displaying the wearer's bending angle, waist twist angle, and waist bending angle information in real time.

The disclosure includes a method of providing a user interface indicating information on the risk of back injury of a wearer of a wearable robot assisting back strength, which provides an x-axis time y-axis bending angle graph user interface or an x-axis time y-axis waist twist angle graph user interface.

The disclosure includes a method of providing a user interface indicating information on the risk of waist injury of a wearable robot wearer, which provides at least one of a wearer's back injury risk picture user interface, a wearer's work face information, a wearer's work balance information user interface, and a wearer's back injury risk information in step of generating the user interface.

The disclosure includes a method of providing a user interface indicating information on the total number of actions per day of the wearer, a user interface providing information on the wearer's safety motion ratio, a user interface providing information on the wearer's daily load reduction amount, a user interface providing information on the wearer's wearing time, and a user interface providing information on the wearer's daily motion safety score.

The disclosure includes a method of providing a user interface indicating information on a wearer's safety motion ratio based on 100%, providing information on an excessive bending ratio daily by the wearer, providing information on a wearer's daily long bending ratio by the user interface, providing information on a wearer's daily side waist bending ratio by providing information on the wearer's daily waist twisting ratio, and providing information on a user interface calculated by subtracting the average of the ratio of one or more of the values of the user interface or two or more of the combinations of them.

[Advantageous Effects]

The above-described wearable robot that assists the waist muscular strength of the present invention has an advantage of adjusting the stiffness according to the type of work using the waist muscular strength or the intensity of the work to be assisted.

Additionally, the wearable robot has the advantage of having the clutch function capable of limiting the wearer's range of movement depending on the type of work.

Additionally, the wearable robot has the advantage of independently operating the stiffness adjustment function and the clutch function.

According to the present invention, provided is the manipulation device for the wearable robot, which is capable of controlling the wearable robot to adjust the stiffness of the wearable robot or limit the range of motion.

In addition, provided is the manipulation device of the wearable robot, which is capable of operating without restrictions on usage time, reducing the weight and securing the durability because there are no separate electronic operating elements, and easily performing the maintenance. Also, there is an advantage of realizing more diverse stiffness by using the actuator provided in the waist muscular strength assisting unit of the wearable robot.

[Description of Drawings]

FIG. 1 is a view analyzing force-moment acting on a spine and erector spinae muscles during an operation of lifting an object.

FIG 2 is a view analyzing the force-moment acting on the spine and erector spinae muscles during the operation of lifting an object when wearing a wearable robot that assists waist muscular strength according to the present invention.

FIG 3 is a view illustrating a wearing state of the wearable robot that assists waist muscular strength according to an embodiment of the present invention.

FIG. 4 is a view illustrating a detailed configuration of a waist muscular strength assisting unit of the wearable robot that assists waist muscular strength according to an embodiment of the present invention.

FIG. 5 is a conceptual view illustrating main parts of the waist muscular strength assisting unit of the wearable robot that assists waist muscular strength according to an embodiment of the present invention.

FIGS. 6 to 9 are views for explaining changes in stiffness of the waist muscular strength assisting unit according to a control operation of a stiffness adjusting unit in FIG. 5.

FIG. 10 is a side cross-sectional view of the waist muscular strength assisting unit of the wearable robot that assists waist muscular strength according to an embodiment of the present invention.

FIG. 11 is a view separately illustrating only an elastic moving unit in FIG. 10.

FIG. 12 is a view for explaining changes in position of a sliding cam in each mode according to the control operation of the stiffness adjusting unit in FIG. 10.

FIG. 13 is a view illustrating an operation of restraining or allowing a movement of a slider according to a movement of the sliding cam.

FIG. 14 is a view for explaining an operation of a clutch unit of the wearable robot that assists waist muscular strength according to an embodiment of the present invention.

FIG. 15 is a view for explaining a clutch unit of a waist muscular strength assisting unit of a wearable robot that assists waist muscular strength according to another embodiment of the present invention.

FIGS. 16 and 17 are views illustrating a manipulation device of the wearable robot with a front cover of a manipulation device housing removed.

FIG. 18 is a view for explaining a configuration of the manipulation device of the wearable robot according to the present invention.

FIGS. 19 to 23 are views illustrating states in which each mode is set by pulling or releasing a first cable according to the manipulation device of the wearable robot of the present invention.

FIG. 24 is a view illustrating a state in which a second cable is released according to the manipulation device of the wearable robot of the present invention.

FIG. 25 is a view illustrating a state in which each mode is set by pulling or releasing a 1-1 cable or a 1-2 cable of the manipulation device of the present invention.

FIG. 26 is a block diagram for explaining an operation of a first manipulation target unit and a second manipulation target unit according to an embodiment of the present invention.

FIG. 27 is a view illustrating a state in which a sensor of the wearable robot according to the present invention is built into the waist muscular strength assisting unit.

FIG. 28 is a view illustrating a real-time wearer movement sensor user interface in a user interface that senses a movement of a wearable robot wearer according to the present invention.

FIG. 29 is a view illustrating a wearer movement analysis user interface in the user interface for analyzing the movement of the wearable robot wearer according to the present invention.

FIG. 30 is a view illustrating the wearer movement analysis report user interface in a result report user interface regarding the movement of the wearable robot wearer according to the present invention.

FIG. 31 is a view illustrating a wearer movement safety score report user interface in the result report user interface regarding the movement of the wearable robot wearer according to the present invention.

FIG. 32 is a view analyzing force-moment applied to the waist due to a wearer's upper body and a heavy object during the operation of lifting an object.

FIG. 33 is a view for explaining a clutch operation and a stiffness adjustment manipulation of each switch of a stiffness adjustment button switch board according to an operation of the stiffness adjustment button according to an embodiment of the present invention.

FIG. 34 is a view for explaining the clutch operation of each switch of the stiffness adjustment button switch board according to a manipulation of the stiffness adjustment button according to an embodiment of the present invention.

[Mode for Invention]

Specific details of the embodiments are included in the detailed description and drawings.

The advantages and features of the present invention and methods for achieving them will become clear by referring to the embodiments described in detail below along with the accompanying drawings. However, the present invention is not limited to the embodiments disclosed below and may be implemented in various different forms. These embodiments are merely provided to ensure that the disclosure of the present invention is complete and to fully inform those skilled in the art of the present invention of the scope of the invention. The invention is defined only by the scope of the claims. Like reference numerals refer to like elements throughout the specification.

Hereinafter, the present invention will be described with reference to drawings illustrating a wearable robot that assists waist muscular strength according to embodiments of the present invention.

**Principle of the invention**

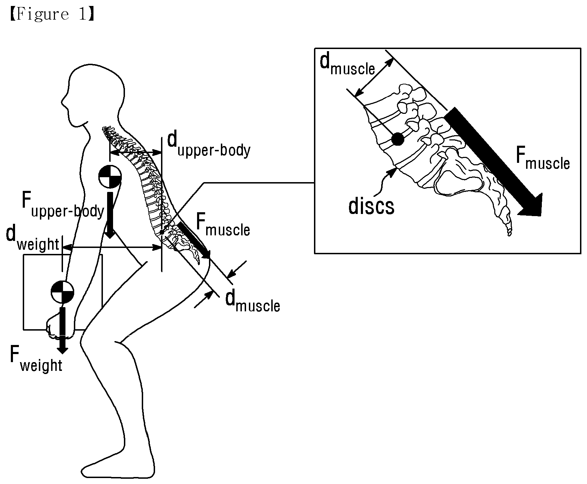

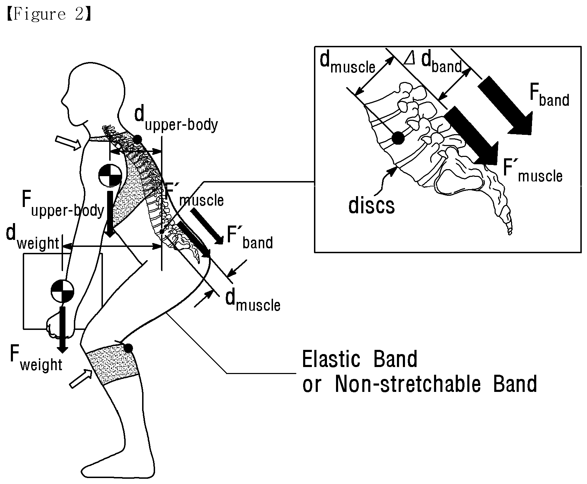

FIG. 1 is a view analyzing force-moment acting on a spine and erector spinae muscles during an operation of lifting an object. FIG 2 is a view analyzing the force-moment acting on the spine and the erector spinae muscles during the operation of lifting the object when wearing a wearable robot that assists waist muscular strength according to the present invention.

When lifting the object as illustrated in FIG 1, a relationship between the force and moment acting on the spine and the erector spinae muscles is as follows.

$$F_{muscle} \cdot d_{muscle} \fallingdotseq F_{upper\text{-}body} \cdot d_{upper\text{-}body} + F_{weight} \cdot d_{weight}$$

Here, $F_{muscle}$ is force that acts on the spine and the erector spinae muscles when lifting the object, $d_{muscle}$ is a moment arm of the force acting on the spine and the erector spinae muscles, $F_{upper\text{-}body}$ is a weight of an upper body, $d_{upper\text{-}body}$ is a moment arm of the weight of the upper body, $F_{weight}$ is a weight of the object, and $d_{weight}$ is a moment arm of the weight of the object.

Referring to the above equation, when lifting the object, moment force that may overcome moment force caused by the weight of the upper body and the weight of the object may be applied by the spine and the erector spinae muscles to lift the object.

When lifting the object, since a moment arm of a spinal joint is extremely small, the spine and the erector spinae muscles are required to support and lift the object with great force. Thus, a heavy work or repetitive work may put a strain on a musculoskeletal system.

As illustrated in FIG 2, when lifting an object by attaching an elastic band or a non-stretchable band to a back waist, a relationship between the force and moment acting on the spine and the erector spinae muscles is as follows.

$$F'_{muscle} \cdot d_{muscle} + F_{band} \cdot (\Delta d_{band} + \Delta d_{muscle}) \fallingdotseq F_{upper\text{-}body} \cdot d_{upper\text{-}body} + F_{weight} \cdot d_{weight}$$

Here, $F_{band}$ is force acting on a band of the wearable robot, and $\Delta d_{band}$ is a distance between the band and the body.

Therefore, when the two equations are compared, since the force acting on the band when lifting the object may be transmitted as supporting force, the object may be lifted by the spine and erector spinae muscles with less force.

Hereinafter, a detailed configuration and operation of the wearable robot that assists spinal muscular strength according to the present invention will be described.

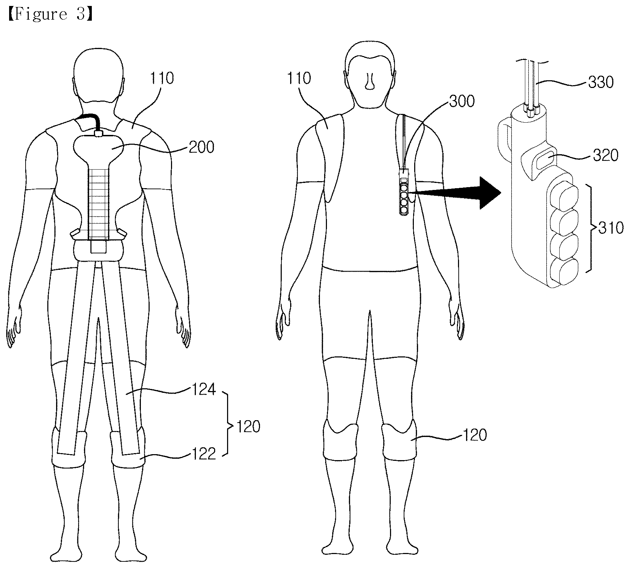

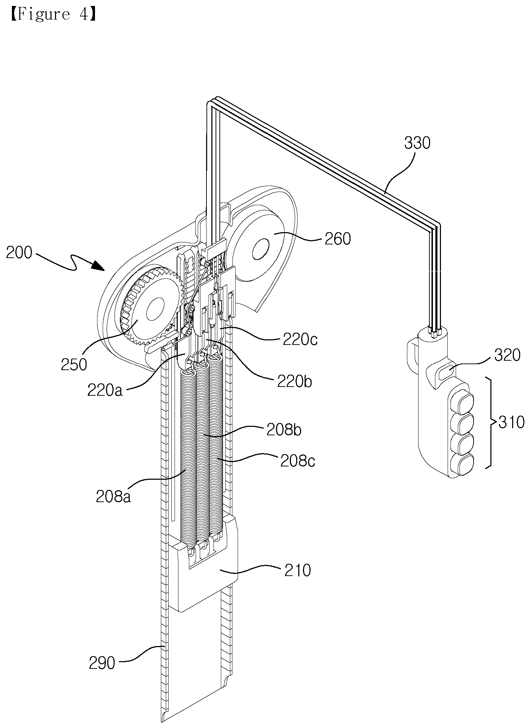

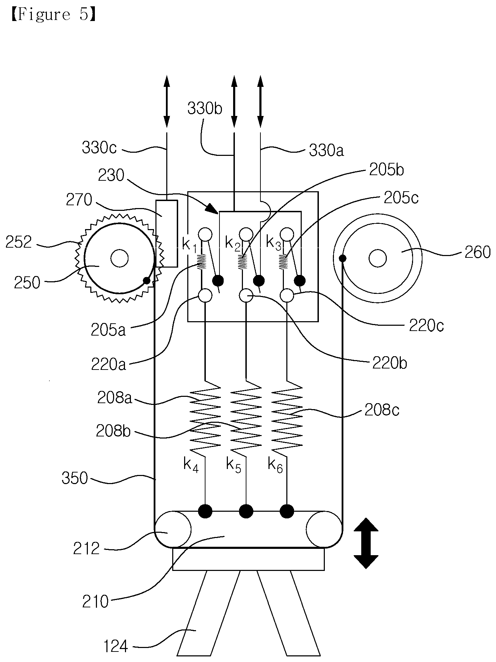

FIG. 3 is a view illustrating a wearing state of the wearable robot that assists the waist muscular strength according to an embodiment of the present invention. FIG. 4 is a view illustrating a detailed configuration of a waist muscular strength assisting unit of the wearable robot that assists the waist muscular strength according to an embodiment of the present invention. FIG. 5 is a conceptual view illustrating a main part of the waist muscular strength assisting unit of the wearable robot that assists the waist muscular strength according to an embodiment of the present invention.

The wearable robot that assists the waist muscular strength according to an embodiment of the present invention may include an upper wearing unit 110, a waist muscular strength assisting unit 200, and a lower wearing unit 120.

The upper wearing unit 110 is worn on the upper body and fixes the waist muscular strength assisting unit 200. The upper wearing unit 110 may be fixed to a shoulder by using both shoulder straps as illustrated in the drawing. However, but the embodiment of the present invention is not limited to the fixing type, fixed position, and fixing method of the upper wearing unit 110. Also, the upper wearing unit 110 may be made of a light and comfortable fabric material or a material having a cushioning function.

The waist muscular strength assisting unit 200 is fixed to the upper wearing unit 110 and is seated on the back waist and assists the waist muscular strength in a motion of bending or straightening a waist.

The lower wearing unit 120 is worn below the waist and is connected to a lower end of the waist muscular strength assisting unit 200. The lower wearing unit 120 may include a connecting part 124 that connects a wearing part 122 worn on the body and the waist muscular strength assisting unit 200. The connecting part 124 may be formed of a strap made of a non-elastic material, but is not necessarily limited to this and may be formed of an elastic material.

As illustrated in FIG 3, the wearing part 122 has a structure that wraps calves of both legs in the form of a belt and is fixed in a buckle or Velcro method. However, the embodiment of the present invention is not limited to the fixing type, the fixed position, and the fixing method. For example, the fixed position of the lower wearing unit 120 may be at a foot, a thigh, or a calf.

Also, the lower end of the waist muscular strength assisting unit 200 and the wearing part 122 of each of both legs may be connected by the connecting part 124 of the lower wearing unit 120. Although the connecting part 124 may be formed of a strap made of a non-elastic material, the embodiment of the present invention is not limited thereto. For example, the connecting part 124 may be formed of an elastic material.

According to one embodiment of the present invention, a manipulation device 401 may be disposed in front of the body to operate the stiffness adjustment unit 230 that adjusts the stiffness of the waist muscular strength assisting unit 200 or to operate the clutch unit 390. In this embodiment, the manipulation device 401 may be provided with a stiffness adjustment button 310 for adjusting the stiffness of the waist muscular strength assisting unit 200 to MODE 0, MODE 1, MODE 2, and MODE 3 and a clutch unit operation button 320. The manipulation device 401 and the waist muscular strength assisting unit 200 may be connected by a cable 330, and a detailed configuration on this will be described later.

According to the present invention, the waist muscular strength assisting unit 200 may include a first elastic member 205, a second elastic member 208, a moving part 210, a stiffness adjustment unit 230, and a housing 290. Additionally, the waist muscular strength assisting unit 200 may further include a clutch unit 390. Specifically, the housing 290 may be fixed to or detached from the upper wearing unit 110. However, the embodiment of the present invention is not limited thereto.

According to one embodiment of the present invention, the waist muscular strength assisting unit 220 may be separated from the upper wearing unit 110, but may also be formed integrally with the upper wearing unit 110.

According to one embodiment of the present invention, each of the first elastic member 205 and the second elastic member 208 may include a plurality of elastic members arranged in series or in parallel.

According to the present invention, the moving part 210 is connected to a lower end of the second elastic member 208 and an upper end of the connecting part 124 of the lower wearing unit 120. The moving part 210 is disposed between the second elastic member 208 and the connecting part 124 of the lower wearing unit 120to slide up and down in the housing 290 according to a movement of the waist. In the following description, unless otherwise stated, the upper and lower directions may refer to upper and lower directions based on a waist axis direction when the waist muscular strength assisting unit 200 is seated on the back waist.

As illustrated in FIG. 4, the housing 290 may be formed to guide a vertical sliding movement of the moving part 210. As the moving part 210 slides up and down, the first elastic member 205 or the second elastic member 208 stretches. Accordingly, elastic force may be stored in the first elastic member 205 or the second elastic member 208, and the moving part 210 may be returned to an original position thereof by the elastic force.

According to the present invention, the stiffness adjustment unit 230 may adjust overall stiffness formed by the first elastic member 205 or the second elastic member 208 when the moving part 210 moves. In this embodiment, stiffness may mean elastic modulus.

According to the present invention, when the stiffness formed by the first elastic member 205 or the second elastic member 208 is small, the moving part 210 moves with a relatively small force when the waist moves, and supporting force is relatively small. Conversely, when the stiffness formed by the first elastic member 205 or the second elastic member 208 is high, the moving part 210 moves with a relatively large force when the waist moves, and the supporting force is relatively large. In other words, the supporting force may be adjusted depending on the stiffness. Therefore, in the present invention, the stiffness may be adjusted according to the type of work of the wearer or the intensity of work to be assisted.

As illustrated in FIGS. 4 and 5, the first elastic member 205 may be connected to the second elastic member 208 in series. Here, the first elastic member 205 may have an upper end fixed to the housing 290 and a lower end fixed to the slider 220. The second elastic member 208 may have an upper end fixed to the slider 220 and a lower end fixed to the moving part 210. The first elastic member 205, the slider 220, and the second elastic member 208 constitute an elastic moving unit, and the drawing shows an embodiment in which three elastic moving units are arranged in parallel. However, the embodiment of the present invention is not limited to the number of elastic moving units arranged in parallel. For example, only one elastic moving unit may be arranged.

Specifically, as illustrated in FIG. 5, the first elastic member 205 may include a 1-1 elastic member 205a, a 1-2 elastic member 205b, and a 1-3 elastic member 205c. The slider 220 may include a first slider 220a, a second slider 220b, and a third slider 220c. Accordingly, upper ends of the 1-1 elastic member 205a, the 1-2nd elastic member 205b, and the 1-3 elastic member 205c may be fixed to the housing 290. A lower end of the 1-1 elastic member 205a may be fixed to the first slider 220a, a lower end of the 1-2 elastic member 205b may be fixed to the second slider 220b, and a lower end of the 1-3 elastic member 205c may be fixed to the third slider 220c.

Additionally, the second elastic member 208 may include a 2-1 elastic member 208a, a 2-2 elastic member 208b, and a 2-3 elastic member 208c. Accordingly, lower ends of the 2-1 elastic member 208a, 2-2 elastic member 208b, and 2-3 elastic member 208c may be fixed to the moving part 210. An upper end of the 2-1 elastic member 208a may be fixed to the first slider 220a, an upper end of the 2-2 elastic member 208b may be fixed to the second slider 220b, and an upper end of the 2-3 elastic member 208c may be fixed to the third slider 220c.

In this way, the elastic moving unit has a form in which the first elastic member 205 and the second elastic member 208 are connected in series with the first slider 220a, the second slider 220b, and the third slider 220c therebetween. The upper end of the first elastic member 205 is fixed to the housing 290, and the lower end of the second elastic member 208 is fixed to the moving part 210. Accordingly, the first slider 220a, the second slider 220b, and the third slider 220c may move up and down between the first elastic member 205 and the second elastic member 208.

According to the present invention, when the first slider 220a, the second slider 220b, and the third slider 220c may freely move up and down without restraint, and when the moving part 210 moves up and down, elasticity of the first elastic member 205 and the second elastic member 208 may act simultaneously. For example, in the case of the leftmost elastic moving unit illustrated in FIG. 5, when the first slider 220a may freely move up and down without restraint, an elastic modulus k1 of the 1-1 elastic member 205a and an elastic modulus k4 of the 2-1 elastic member 208a act simultaneously. Accordingly, an overall elastic modulus of the leftmost elastic moving unit illustrated in FIG. 5 may decrease.

Conversely, when the first slider 220a, the second slider 220b, and the third slider 220c may not move up and down as movements of the first slider, the second slider, and the third slider are restricted, the overall elastic modulus of the leftmost elastic moving unit illustrated in FIG. 5 may increase , in comparison with a case in which the first slider 220a moves up and down freely without the restraint because only elasticity of the 2-1 elastic member 208a acts when the moving part 210 moves up and down.

In this way, the stiffness adjustment unit 230 may adjust the stiffness by restricting or allowing the movements of the first slider 220a, the second slider 220b, and the third slider 220c.

As illustrated in FIGS. 5 to 9, three elastic moving units may be arranged in parallel. When constraint conditions of the first slider 220a, the second slider 220b, and the third slider 220c are different, the overall elastic modulus may be adjusted in more diverse ways.

Here, each of the 1-1 elastic member 205a, the 1-2 elastic member 205b, and the 1-3 elastic member 205c may have an elastic modulus smaller than that of each of the 2-1 elastic member 208a, the 2-2 elastic member 208b, and the 2-3 elastic member 208c. Preferably, the elastic moduli of the 1-1 elastic member 205a, the 1-2 elastic member 205b, and the 1-3 elastic member 205c may be very small enough to restore the position of the moving part 210 to an original position thereof.

In this case, the first slider 220a, the second slider 220b, and the third slider 220c may be released from the restraint by the stiffness adjustment unit 230. In this case, the first slider 220a, the second slider 220b, and the third slider 220c may freely move up and down without the restraint. Here, when the moving part 210 moves, the stiffness may become extremely small because, by the 1-1 elastic member 205a, the 1-2 elastic member 205b, and the 1-3 elastic member 205 each having an extremely small elastic modulus, an overall elastic modulus value of the elastic moving unit in which the first elastic member 205 and the second elastic member 208 are connected in series becomes very small.

On the contrary, when, as the movements of the first slider 220a, the second slider 220b, and the third slider 220c are restricted by the stiffness adjusting unit 230, the first slider 220a, the second slider 220b, and the third slider 220c may not move up and down, only the elastic force of the second elastic member 208, which has a large elastic modulus, may act when the moving part 210 moves, and the stiffness may relatively increase.

In this embodiment, the first elastic member 205 and the second elastic member 208 may be formed of any one of a spring, an elastic band, and an elastic beam. Here, the elastic beam may have a bar shape made of an elastic material.

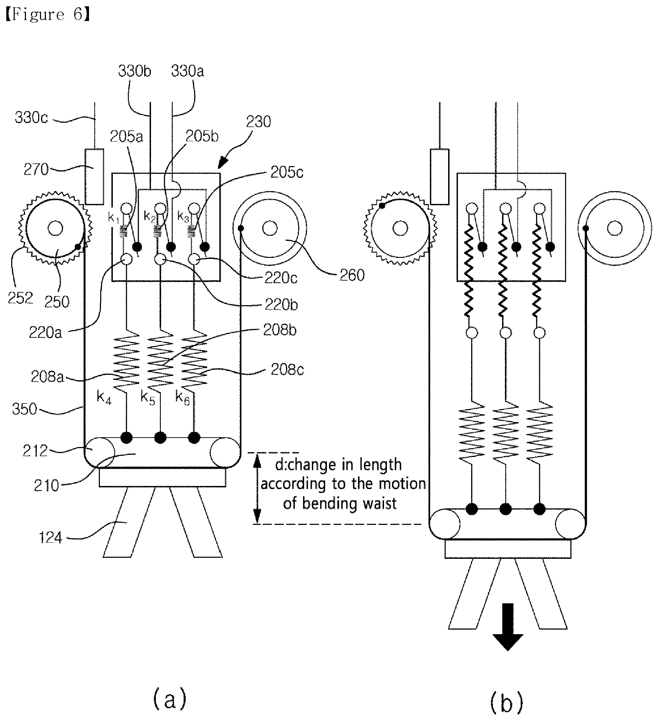

Hereinafter, changes in stiffness according to an operation of the stiffness adjustment unit 230 will be described with reference to FIGS. 6 to 9 for a structure in which three elastic moving units are arranged in parallel.

FIGS. 6 to 9 are views illustrating changes in the stiffness of the waist muscular strength assisting unit 200 according to a control operation of the stiffness adjustment unit 230 in FIG. 5.

As illustrated, when the wearer bends his or her waist, lengths of the first elastic member 205 and the second elastic member 208 may change. Accordingly, the moving part 210 may be guided by the housing 290 to move in a vertical direction. Here, the overall stiffness formed by 1-1 elastic member 205a, 1-2 elastic member 205b, 1-3 elastic member 205c, 2-1 elastic member 208a, 2-2 elastic member 208b, and the 2-3 elastic member 208c when the moving part 210 moves may be adjusted in various ways by the control operation of the stiffness adjusting unit 230.

First, as illustrated in FIG. 6, in MODE 0, the stiffness adjusting unit 230 does not restrict the movements of the first slider 220a, the second slider 220b, and the third slider 220c of the three elastic moving units. Accordingly, when the moving part 210 moves, each of the elastic moduli k1, k2, and k3 below threshold values of the 1-1 elastic member 205a, the 1-2 elastic member 205b, and the 1-3 elastic member 205c each having an elastic modulus less than or equal to a threshold value acts. Therefore, among MODE0, MODE1, MODE2, and MODE3, the stiffness mode MODE 0 has a lowest overall elastic modulus value.

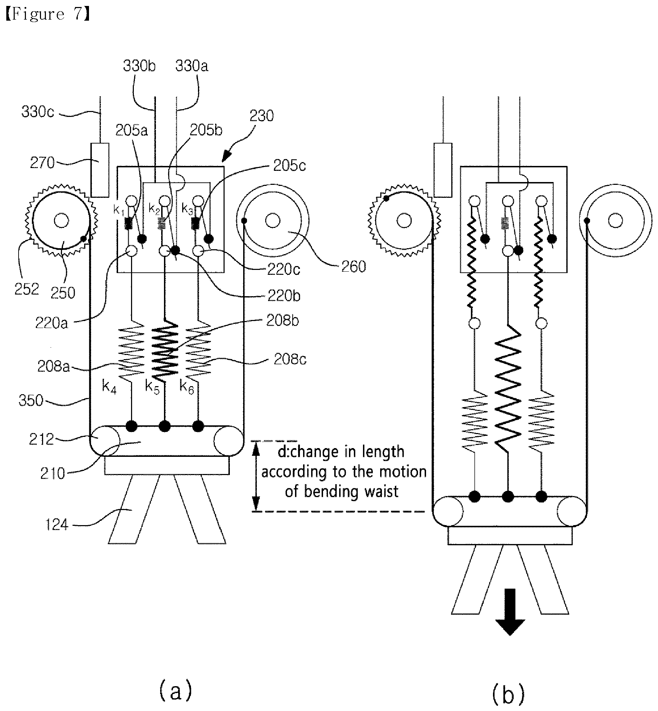

As illustrated in FIG. 7, in MODE 1, the stiffness adjusting unit 230 restricts only the movement of the second slider 220b and does not restrict the movement of the first slider 220a and the third slider 220c. Accordingly, the elastic moving unit having the first slider 220a and the third slider 220c may have an elastic modulus similar to k1 and k3 of the 1-1 elastic member 205a and the 1-3 elastic member 205c, each of which has the elastic modulus equal to or less than a relatively small threshold. The elastic modulus of the elastic moving unit having the second slider 220b may have k5, which is the elastic modulus of the 2-2 elastic member 208b having an elastic modulus equal to or greater than a relatively large threshold value.

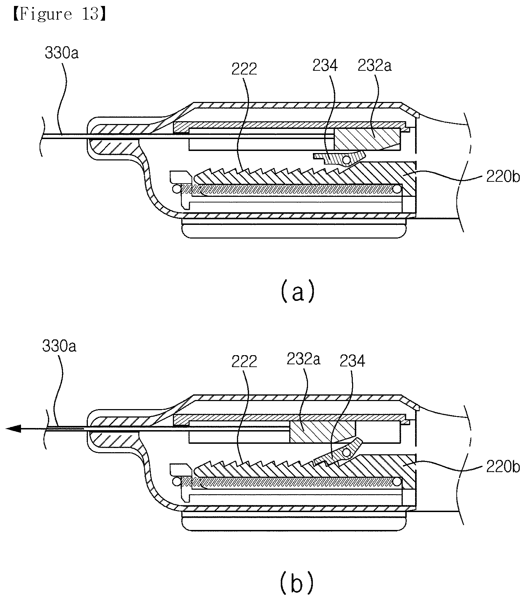

Therefore, for the three elastic moving units arranged in parallel, the k1 and k3 values have little effect on the overall stiffness. Therefore, the overall elastic modulus value has a value close to the k5 value, resulting in a medium-weak stiffness mode with stronger stiffness than MODE 0. Specifically, in MODE 1, the stiffness adjusting unit 230 restricts only the movement of the second slider 220b, which will be described in detail in FIG. 13 below.

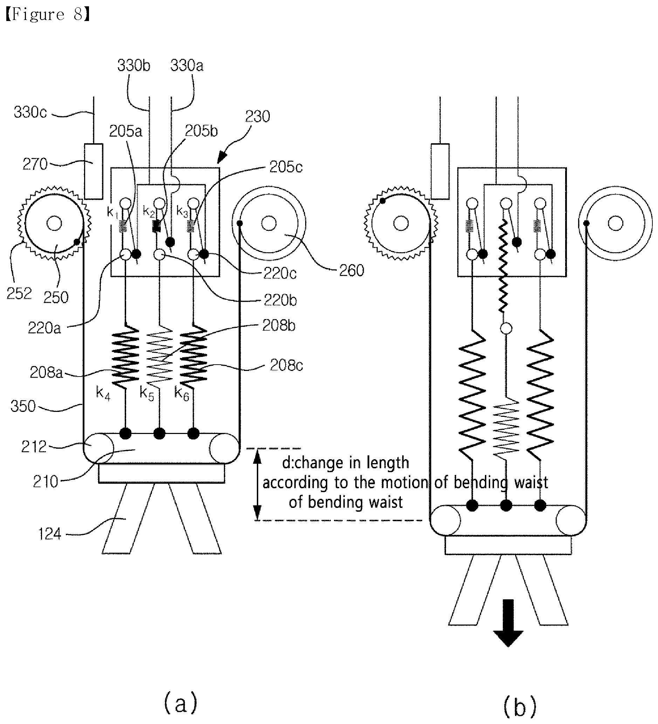

As illustrated in FIG. 8, in MODE 2, the stiffness adjustment unit 230 may restrict the movement of the first slider 220a and the third slider 220c without restricting the movement of the second slider 220b. Accordingly, the elastic moduli of the elastic moving part including the first slider 220a and the third slider 220c have k4 and k6, respectively. The elastic moduli k4 and k6 are the elastic moduli of the 2-1st elastic member 208a and the 2-3rd elastic member 208c, which have elastic modulus values greater than or equal to a relatively large threshold. The elastic modulus of the elastic moving unit having the second slider 220b has an elastic modulus similar to k2 of the first-second elastic member 205b, which has an elastic modulus value below a very small threshold.

Therefore, for three elastic moving units arranged in parallel, the k2 value has little effect on the overall stiffness. The overall elastic modulus has a value close to k4+k6, resulting in a medium stiffness mode with stronger stiffness than MODE 1. Specifically, in MODE 2, the stiffness adjustment unit 230 does not restrict the movement of the second slider 220b. In addition, the stiffness adjustment unit 230 in MODE 2 will be described in detail in FIG. 13 below in relation to restriction of the movement of the first slider 220a and the third slider 220c.

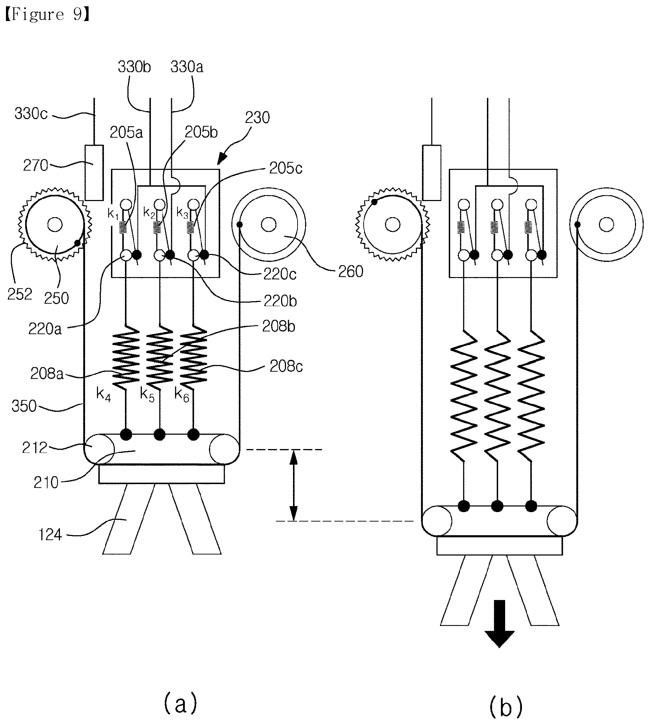

As illustrated in FIG. 9, in MODE 3, the stiffness adjustment unit 230 may restrict the movements of the first slider 220a, the second slider 220b, and the third slider 220c. Therefore, the elastic moduli of the three elastic moving units have k4, k5, and k6, respectively. The elastic moduli of k4, k5, and k6 are the elastic moduli of the 2-1st elastic member 208a, the 2-2nd elastic member 208b, and the 2-3rd elastic member 208c, which have elastic moduli above a relatively large threshold. Therefore, the overall elastic modulus for the three elastic moving units arranged in parallel has a value of k4+k5+k6, resulting in a strongest stiffness mode, which is stronger than MODE 2. Specifically, in MODE 3, the stiffness adjustment unit 230 restricts the movements of the first slider 220a, the second slider 220b, and the third slider 220c. This will be described in detail in FIG. 13 below.

For reference, in FIGS. 6 to 9, the left FIG (a) and the right FIG (b) show a case in which the moving part 210 is disposed at the top and a case in which the moving part 210 is disposed at the bottom, respectively.

Hereinafter, a more detailed configuration of the stiffness adjustment unit 230 according to this embodiment will be described.

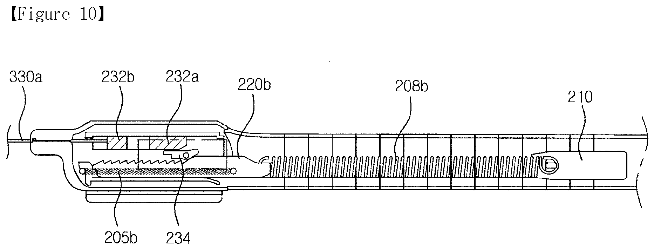

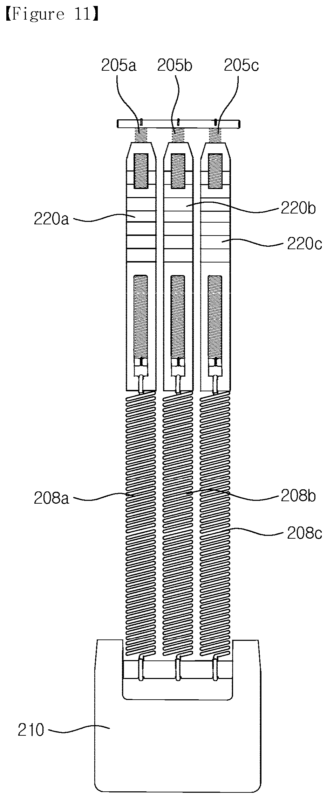

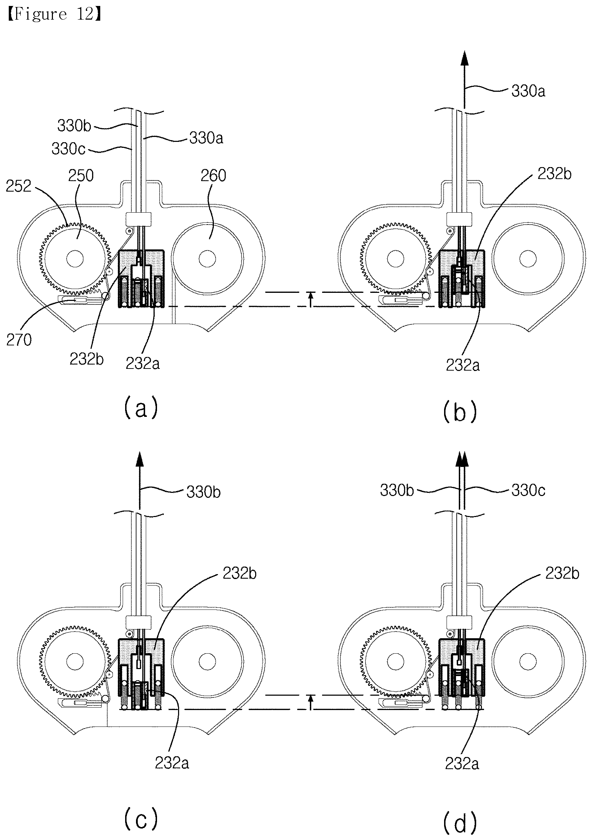

FIG 10 is a side cross-sectional view of the waist muscular strength assisting unit of the wearable robot that assists waist muscular strength according to an embodiment of the present invention. FIG. 11 is a view illustrating only the elastic moving unit separately from FIG. 10. FIG. 12 is a view illustrating a change in position of the sliding cam in each mode according to the control operation of the stiffness adjusting unit in FIG. 10. FIG 13 is a view illustrating the operation of restraining or allowing the movement of the slider according to the movement of the sliding cam.

The elastic moving unit of the present invention may include the first elastic member 205, the second elastic member 208, and the slider 220.

As illustrated in FIGS. 10 and 11, the 1-1 elastic member 205a, the 1-2 elastic member 205b, and the 1-3 elastic member 205c may have upper ends fixed at the upper end of the housing 290 and lower ends fixed to the first slider 220a, the second slider 220b, and the third slider 220c, respectively.

As illustrated, the first slider 220a, the second slider 220b, and the third slider 220c may each have a long bar shape. The 1-1 elastic member 205a, the 1-2 elastic member 205b, and the 1-3 elastic member 205c are respectively inserted into the first slider 220a, the second slider 220b, and the third slider 220c in a longitudinal direction. The lower ends of the 1-1 elastic member 205a, the 1-2 elastic member 205b, and the 1-3 elastic member 205c may be formed to be fixed inside the first slider 220a, the second slider 220b, and the third slider 220c, respectively. The upper ends of the 2-1 elastic member 208a, the 2-2 elastic member 208b, and the 2-3 elastic member 208c may be connected to the lower ends of the first slider 220a, the second slider 220b, and the third slider 220c, respectively. The lower ends of the 2-1 elastic member 208a, the 2-2 elastic member 208b, and the 2-3 elastic member 208c may each be connected to the moving part 210.

In this way, the first elastic member 205 and the second elastic member 208 may be connected in series with the slider 220 therebetween. In addition, as described above, the elastic moving units including the first elastic member 205, the second elastic member 208, and the slider 220 may be arranged in parallel as illustrated in FIG. 11.

As illustrated in FIG. 13, a catching protrusion 222 may be formed on a top surface of the slider 220 in a movement direction of the slider 220. Here, as illustrated, a plurality of catching protrusions 222 may be formed in a longitudinal direction of the slider 220 to have a gear-like shape.

As illustrated, the stiffness adjustment unit 230 may include a sliding cam 232, a locking part 234, a 1-1 cable 330a, and a 1-2 cable 330b.

According to the present invention, the sliding cam 232 moves horizontally from an upper side of the slider 220 in the movement direction of the slider 220. Here, the upper side refers to the upper side when the movement direction of the slider 220 is viewed horizontally. Here, the 1-1 cable 330a and the 1-2 cable 330b may be connected to one side of the sliding cam 232. The other ends of the 1-1 cable 330a and the 1-2 cable 330b are connected to the manipulation device 401. The 1-1 cable 330a and the 1-2 cable 330b may be pulled or released according to an operation of the stiffness adjustment button 310 of the manipulation device 401. For example, when one of the stiffness adjustment buttons 310 of the manipulation device 401 is pressed, the 1-1 cable 330a and the 1-2 cable 330b may be pulled or released. Hereinafter, the manipulation device 401 will be described in detail.

As illustrated in FIG. 13, the locking part 234 exerts an elastic force pressing counterclockwise in the drawing around a predetermined axis by a torsion spring on the upper side of the slider 220. When the sliding cam 232 moves horizontally, a rotation angle of the locking part 234 varies depending on whether is contact with the sliding cam 232. Accordingly, the movement of the slider 220 may be restricted by contact with the catching protrusion 222, or the contact with the catching protrusion 222 may be released to release the restraint of the slider 220.

As illustrated in FIG. 13(a), when the first cable 330a is not pulled, the sliding cam 232a contacts the locking part 234. Here, the locking part 234 may be rotated clockwise to release coupling between the locking part 234 and the catching protrusion 222 formed on the top surface of the slider 220. Therefore, the slider 220 may freely move.

On the other hand, as illustrated in FIG. 13(b), when the first cable 330a is pulled by the operation of the manipulation device 401, the sliding cam 232 connected to the first cable 330a may move to the left to release the contact with the locking part 234. Here, the locking part 234 is rotated counterclockwise by elastic force of the torsion spring formed on the rotation axis of the locking part 234. The locking part 234 and the catching protrusion 222 formed on the top surface of the slider 220 may be coupled to restrict the movement of the slider 220b.

Here, the sliding cam 232 and the locking part 234 may be arranged for each elastic moving unit. Accordingly, the restraints of the first slider 220a, the second slider 220b, and the third slider 220c of each elastic moving part may be individually controlled.

In this embodiment, by manipulating the stiffness adjustment button 310, the 1-1 cable 330a and the 1-2 cable 330b may be pulled or restored to original states thereof. That is, a configuration in which the sliding cam 232 is moved manually is disclosed, but the sliding cam 232 may also be moved by power of a motor. In addition, the configuration of the stiffness adjustment unit 230, which has the characteristic of restraining or allowing the movement of the slider 220, is not limited to the above-described structure.

As illustrated, when three elastic moving units are arranged in parallel, the stiffness may be adjusted by individually arranging three sliding cams 232 for each elastic moving unit. However, in this embodiment, the stiffness may be adjusted by using two sliding cams 232a and 232b.

The elastic moving units illustrated in FIG. 11 are called, in order from the left, a first elastic moving unit, a second elastic moving unit, and a third elastic moving unit. Here, as illustrated in FIG. 12, the first sliding cam 232a moves horizontally above the second slider 220b. The second sliding cam 232b may move horizontally above the first slider 220a and the third slider 220c. Here, the second sliding cam 232b is formed in a '⊔' shape, and both ends that are horizontal are disposed above the first slider 220a and the third slider 220c. A first sliding cam 232a may be disposed in a space between both the ends.

Therefore, as illustrated in FIG. 12(a), when the 0th stiffness adjustment button 310a of the manipulation device 401 is pressed, both the 1-1 cable 330a connected to the first sliding cam 232a and the 1-2 cable 330b connected to the second sliding cam 232b are not pulled. Both the first sliding cam 232a and the second sliding cam 232b contact the three locking parts 234 disposed above the second to third elastic moving units. Here, the first slider 220a, the second slider 220b, and the third slider 220c may be freely moved.

In addition, as illustrated in FIG. 12(b), when the first stiffness adjustment button 310b of the manipulation device 401 is pressed, only the 1-1 cable 330a connected to the first sliding cam 232a is pulled. Here, only the first sliding cam 232a moves to the upper side of the drawing, so that the contact between the first sliding cam 232a and the corresponding locking part 234 is released, and the movement of only the second slider 220b is restricted. The first slider 220a and the third slider 220c may be freely moved.

In addition, as illustrated in FIG. 12 (c), when the second stiffness adjustment button 310c of the manipulation device 401 is pressed, only the 1-2 cable 330b connected to the second sliding cam 232b is pulled. Here, only the second sliding cam 232b moves to the upper side of the drawing, so that the movements of the first slider 220a and the third slider 220c are restricted, and the second slider 220b may move freely.

Furthermore, as illustrated in FIG. 12(d), when the third stiffness adjustment button 310d of the manipulation device 401 is pressed, both the 1-1 cable 330a and the 1-2 cable 330b are pulled by the first sliding cam 232a and the second sliding cam 232b. Here, both the first sliding cam 232a and the second sliding cam 232b are moved to the upper side of the drawing. As a result, all of the movements of the first slider 220a, the second slider 220b, and the third slider 220c may be restricted.

When the stiffness adjustment mode is changed by pressing each stiffness adjustment button 310, springs may be connected to the first sliding cam 232a and the second sliding cam 232b, so that the first sliding cam 232a or the second sliding cam 232b, which moves by pulling the 1-1 cable 330a and 1-2 cable 330b, are returned to original positions thereof.

That is, as each stiffness adjustment button 310 is pressed, the 1-1 cable 330a and the 1-2 cable 330b are pulled, and the sliding cams 232a and 232b move. Here, elastic energy is stored in the spring. By pressing each stiffness adjustment button 310, a pulled state of the 1-1 cable 330a and the 1-2 cable 330b may be released. Here, the sliding cams 232a and 232b may be returned to original positions thereof by using the stored elastic energy.

The shape and positional relationship of the first sliding cam 232a and the second sliding cam 232b are not limited to the above descriptions and may be modified in various ways.

**Description of clutch unit**

Hereinafter, the clutch unit 390 will be described with reference to FIGS. 3, 4, and 14.

According to the present invention, the clutch unit 390 limits a downward movement range of the moving part 210. When the wearer bends his or her waist, the moving part 210 moves downward. Here, the clutch unit 390 blocks the downward movement of the moving part 210, thereby preventing the wearer from bending the waist beyond a certain range. For example, when lifting or moving an object, the clutch function may be used to prevent the upper body from lowering further at a certain posture angle or used when working to lean forward. Alternatively, the clutch function may be used when stiffness greater than the maximum stiffness provided by the above-described first elastic member 205 and second elastic member 208 is required.

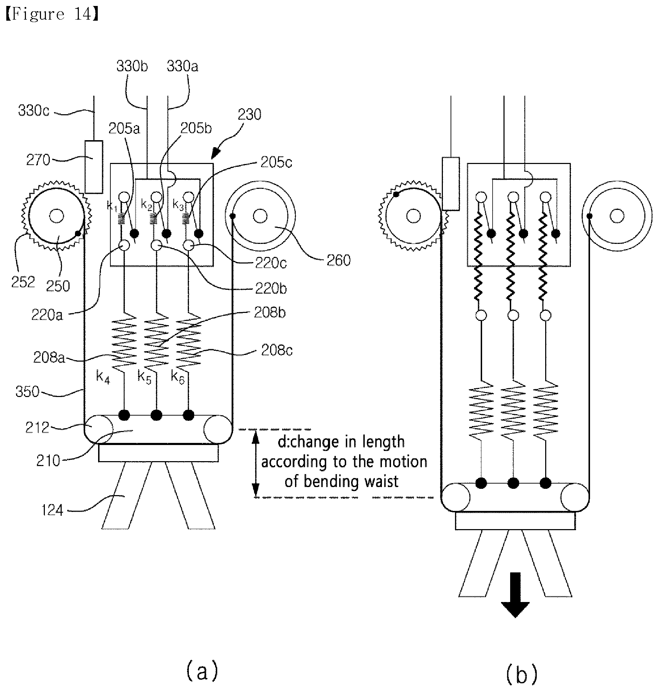

FIG 14 is a view for explaining an operation of the clutch unit of the wearable robot that assists waist muscular strength according to an embodiment of the present invention.

As illustrated in FIG. 14, the clutch unit 390 may include a wire 350, a first fixing unit 260, and a clutch operating unit 280. Specifically, the clutch operating unit 280 may include a second fixing unit 250, a gear train part 252, and a ratchet gear 270.

As illustrated in FIG. 7, the wire 350 is wound horizontally around the moving part 210 and extends to left and right upper portions, and both ends may be fixed to the first fixing unit 260 and the second fixing unit 250, respectively. Rollers 212 that guide a movement of the wire 350 may be disposed on both left and right sides of the moving part 210, respectively.

As illustrated, the first fixing part 260 and the second fixing part 250 are disposed at left and right sides on an upper portion of the housing 290 to fix one end and the other end of the wire 350, respectively. Here, the second fixing part 250 is formed as a pulley and may be fixed by winding the other end of the wire 350 in a circumferential direction. Additionally, a reel spring (not shown) may be mounted on a rotation axis of the second fixing part 250 to elastically rotate.

Accordingly, as the moving part 210 moves downward, the wire 350 wound around the second fixing part 250 is unwound, and a length of the wire 350 extending to the upper left and right sides of the moving part 210 may increase. Here, since the second fixing part 250 rotates elastically, even when the moving part 210 moves due to the elastic force acting in the opposite direction, the wire 350 may maintain tension instead of being loosened.

According to one embodiment of the present invention, the clutch operating unit 280 performs a clutch operation by restricting or allowing rotation of the second fixing part 250. When the moving part 210 is at a predetermined position, the clutch operating unit 280 may block the rotation of the second fixing part 250. In this case, the moving part 210 may move above the above-described position, but a downward movement of the moving part 210 may be restricted by the wire 350. Accordingly, the rotation of the second fixing part 250 may be controlled by the clutch operating unit 280 to limit the downward movement range of the moving part 210.

As illustrated in FIG. 14, as an embodiment of the clutch operating unit 280, the second fixing part 250 may include a gear train part 252 and a ratchet gear 270 in which gears are formed in a circumferential direction. Specifically, the ratchet gear 270 moves in a linear direction or rotates about one side to engage with or disengage from a gear of the gear train part 252.

In the drawing, ratchet gear 270 is configured to rotate around one side. A second cable 330c may be connected to one side of the ratchet gear 270, and the other end of the second cable 330c may be connected to the manipulation device 401. Like the stiffness adjustment button 310, when the clutch unit operation button 320 is pressed or released, the ratchet gear 270 may be rotated by pulling or releasing the second cable 330c. Accordingly, the gear engagement between the ratchet gear 270 and the gear train part 252 may be controlled by the rotation of the ratchet gear 270, thereby restraining or allowing the rotation of the second fixing part 250.

In this embodiment, although the clutch function is controlled manually by manipulating the clutch unit operation button 320, the clutch function may also be controlled by rotating the ratchet gear 270 using a motor or directly controlling the rotation of the second fixing part 250 using a motor.

According to one embodiment of the present invention, like the second fixing part 250, the first fixing part 260 is formed as a pulley, and it is preferable that a reel spring is mounted on the rotation axis so that the first fixing part 260 elastically rotates. As described above, since the second fixing part 250 rotates elastically, when the moving part 210 moves, the wire 350 may maintain tension instead of being loosened. Also, the wire 350 wound around the second fixing part 250 may be unwound or wound.

However, when the rotation of the second fixing part 250 is blocked by the operation of the clutch unit 390, a length of the wire 350 between the first fixing part 260 and the second fixing part 250 is fixed. However, when the first fixing part 260 does not wrap the wire, the wire 350 may become loose when the moving part 210 moves upward, causing the wire 350 to become tangled or deviate from an arrangement path. Accordingly, in the present invention, the first fixing part 260 is also formed as a pulley and elastically rotates. Accordingly, when the clutch function operates, the first fixing part 260 wraps the wire 350 to prevent the wire 350 from being loosened.

Here, it is preferable that the elastic modulus value of the reel spring mounted on the first fixing part 260 is smaller than that of the reel spring mounted on the second fixing part 250.

Since the elastic modulus value of the reel spring mounted on the first fixing part 260 is small, when the moving part 210 moves downward in a state in which the clutch function is released, a force greater than a force with which the reel spring of the second fixing part 250 pulls the wire 350 may be applied, so that the wire 350 wound around the second fixing part 250 is unwound and the moving part 210 moves downward. Conversely, when the moving part 210 moves upward, since the second fixing part 250 pulls the wire 350 with a stronger elastic force than that of the first fixing part 260, the wire 350 may be wound around the second fixing part 250. Here, the wire 350 is not wound around the first fixing part 260.

In addition, when the clutch function is activated, the second fixing part 250 is not rotated by the clutch operating unit 280, so the range in which the moving part 210 moves downward is limited. When the moving part 210 moves upward, the first fixing part 260 rotates due to the elastic force generated by the reel spring of the first fixing part 260. Accordingly, the wire 350 may be wound around the first fixing part 260, and the wire 350 may maintain tension instead of being loosened.

In the present invention, the stiffness adjustment function by the stiffness adjustment unit 230 and the clutch function by the clutch unit 390 may be operated independently.

## Sensor

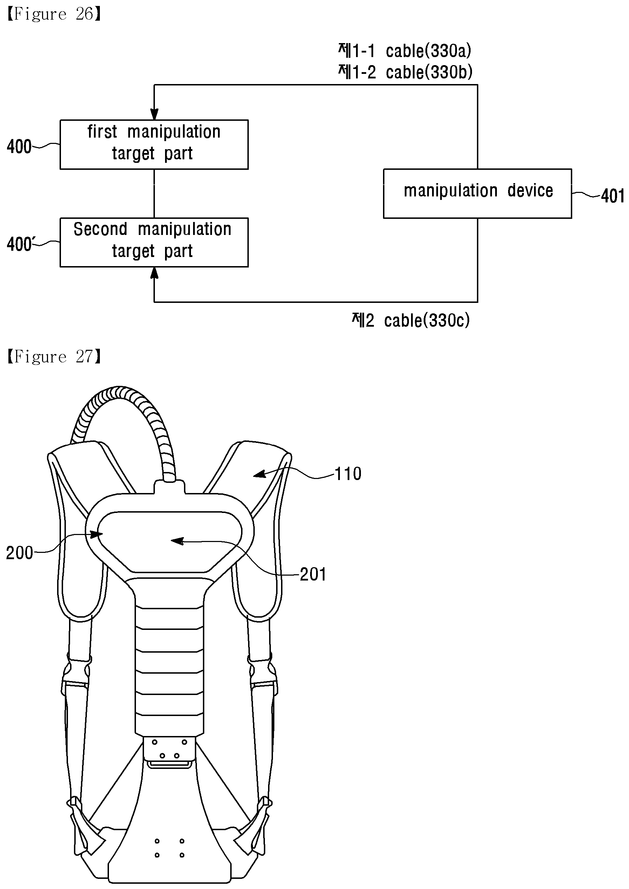

FIG. 27 is a view illustrating that the posture recognition sensor of the wearable robot according to the present invention is built into the waist muscular strength assisting unit.

As illustrated, a posture recognition sensor 201 may be built into the waist muscular strength assisting unit 200 of the wearable robot. Specifically, the posture recognition sensor 201 may set a three-dimensional coordinate system on the upper body of the wearer of the wearable robot and measure an angle and angular velocity of the coordinate system.

## FIG 28, FIG 29

According to one embodiment of the present invention, the posture recognition sensor 201 may be connected wired or wirelessly to a separate user device or a separate communication network. Accordingly, through an user interface, a user interface user may observe a condition of the wearable robot wearer and recognize a risk of waist injury of the wearer. For a specific example, the posture recognition sensor 201 may be connected to a wide area communication network such as LoRa or Sigfox, and data measured through the posture recognition sensor 201 may be transmitted to an external server.

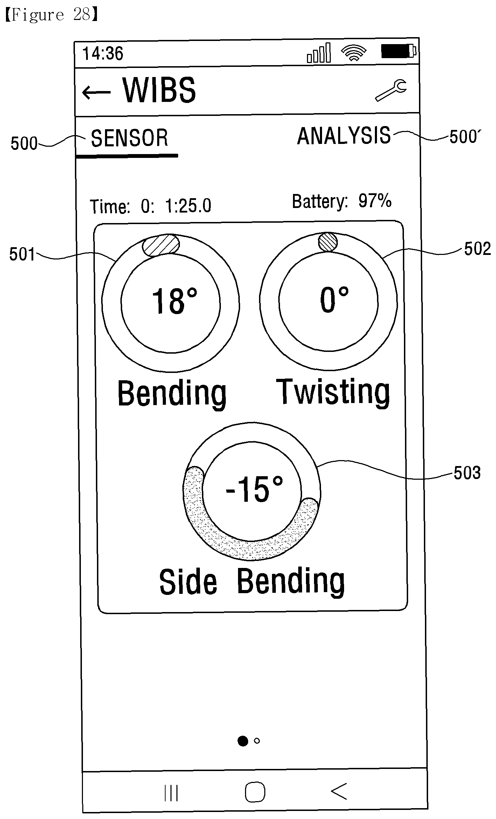

FIG. 28 is a view illustrating a wearer motion sensor user interface in the user interface that senses the movement of the wearable robot wearer according to the present invention.

As illustrated, a wearer motion sensor user interface 500 and a wearer motion analysis user interface 500' may be provided on a top bar of the user interface. When the user taps the wearer motion sensor user interface 500, a waist bending angle measurement user interface 501, a waist twist angle measurement user interface 502, and a waist lowering angle measurement user interface 503 may be provided.

Specifically, the waist bending angle measurement user interface 501 may display a wearer's waist bending angle in real time when the posture recognition sensor 201 measures the wearer's waist bending angle. In a predetermined area of the waist bending angle measurement user interface 501, the wearer's waist bending angle may be expressed in Arabic numerals. In another predetermined area of the waist bending angle measurement user interface 501, the waist bending angle may be visualized and represented as a figure. In this case, a portion of the figure may be displayed distinctly to correspond to the waist bending angle or the Arabic numeral. However, the embodiment of the present invention is not limited to the expression method. The figure may be a circle, oval, or polygon, but is not limited thereto.

According to another embodiment, when the posture recognition sensor 201 measures the angle or angular velocity at which the wearer's waist is twisted, the waist twist angle measurement user interface 502 may display the angle or angular velocity at which the wearer's waist is twisted in real time. In a predetermined area of the waist twist angle measurement user interface 502, the angle or angular velocity at which the wearer's waist is twisted may be expressed in Arabic numerals. In another predetermined area of the waist twist angle measurement user interface 502, the angle or angular velocity at which the waist is twisted may be visualized and represented as a figure. In this case, some of the figures may be displayed distinctly to correspond to the angle or angular velocity at which the waist is twisted or the Arabic numerals. However, the embodiment of the present invention is not limited to the expression method. The figure may be a circle, oval, or polygon, but is not limited thereto. Additionally, in order to distinguish left and right directions of the angle or angular velocity at which the wearer's waist is twisted, the directions may be expressed as positive and negative numbers.

According to another embodiment, when the posture recognition sensor 201 measures the bending angle on wearer's left and right planes, the waist lowering angle measurement user interface 503 may display a lowering angle on the wearer's left and right planes in real time. In a predetermined area of the waist lowering angle measurement user interface 503, the lowering angle of the wearer on the left and right planes may be expressed in Arabic numerals. In another predetermined area of the waist lowering angle measurement user interface 503, the lowering angle of the wearer on the left and right planes may be visualized and displayed as a figure. In this case, a portion of the figure may be displayed distinctly on the left and right planes to correspond to the lowering angle or the Arabic numerals. However, the embodiment of the present invention is not limited to the expression method. The figure may be a circle, oval, or polygon, but is not limited thereto. Additionally, in order to distinguish the left and right directions of the waist lowering angle on the left and right planes of the wearer, the directions may be expressed as positive and negative numbers.

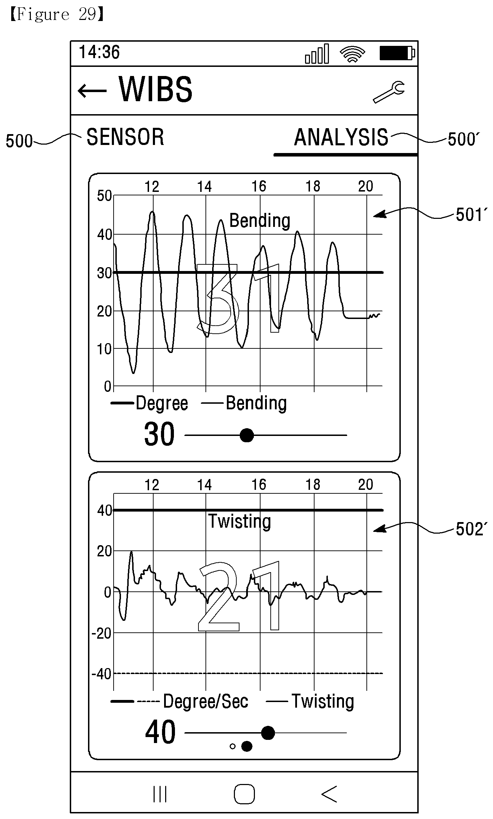

FIG. 29 is a view illustrating a wearer movement analysis user interface in the user interface for analyzing movements of the wearable robot wearer according to the present invention.

As illustrated, a wearer movement sensor user interface 500 and a wearer movement analysis user interface 500' may be provided on the top bar of the user interface. When the user taps the wearer movement analysis user interface 500', an x-axis time y-axis waist bending angle graph user interface 501' and an x-axis time y-axis waist twist angle graph user interface 502' may be provided.

According to one embodiment of the present invention, when the user taps the wearer movement analysis user interface 500', an x-axis time y-axis waist bending angle graph user interface 501' is provided. The x-axis time and y-axis waist bending angle graph user interface 501' may display a waist bending angle measurement value of the wearer's upper body movement as a temporal trend. By simultaneously expressing a standard waist bending angle value set by the user interface user or the wearer, it is possible to visually express whether the wearer's motion exceeds the standard value over time.

As a specific example, when the standard waist bending angle value set by the user interface user or the wearer is 30 degrees, the x-axis time and y-axis waist bending angle graph user interface 501' may count the number of excess occurrences and express the number as an Arabic numeral when the waist bending angle value exceeds 30 degrees during the wearer's movement analysis time., As in the example illustrated in FIG. 29, when the number of occurrences of the waist bending angle value exceeding 30 degrees during the wearer's movement analysis time is 31, the number 31 may be expressed as an Arabic numeral. However, this is merely an example, and the embodiment of the present invention is not limited thereto.

According to one embodiment of the present invention, as in the example mentioned above, when a reference waist bending angle value set by the user interface user or the wearer is 30 degrees, if the waist bending angle value of the x-axis time y-axis waist bending angle graph user interface 501' exceeds 30 degrees during the wearer's movement analysis time, the wearable robot may use a sound generation function to deliver a notification to the wearer or user.

According to another embodiment of the present invention, when the user taps the wearer movement analysis user interface 500', an x-axis time y-axis waist twist angle graph user interface 502' is provided. The x-axis time y-axis waist twist angle graph user interface 502' may display a waist twist angle measurement value of the upper body movement of the wearable robot wearer as a temporal trend. By simultaneously expressing a standard waist twist angle value set by the user interface user or the wearer of the wearable robot, it is possible to visually express whether the wearer's motion exceeds the standard value over time. As a specific example, when the reference twist angle value set by the user interface user or the wearer is 40 degrees and -40 degrees at left and right sides, if the x-axis time y-axis waist twist angle graph user interface 502' may show that the waist twist angle value of the wearable robot wearer exceeds 40 degrees and -40 degrees to the left and right, the number of excess occurrences may be counted and expressed in Arabic numerals, etc. As in the example illustrated in FIG. 29, when the number of occurrences of the waist twist angle value of the wearable robot wearer exceeding 40 degrees and -40 degrees to the left and right is 21, the number 21 may be expressed as an Arabic numeral. However, this is merely an example, and the embodiment of the present invention is not limited thereto.

According to one embodiment of the present invention, as in the above-mentioned example, when the standard twist angle value set by the user interface user or wearer is 40 degrees or -40 degrees to the left or right, if the x-axis time y-axis waist twist angle graph user interface 502' may show that the waist twist angle value of the wearable robot wearer exceeds 40 degrees and -40 degrees to the left and right, the wearable robot may use the sound generation function to deliver a notification to the wearer or user.

According to the present invention, the reference waist bending angle value set by the user interface user or the wearable robot wearer or the reference waist twisting angle value set by the user interface user or the wearable robot wearer may be adjusted and set arbitrarily by the user interface user or the wearable robot wearer, and may also be set in multiple steps.

Specifically, when the set angle value is divided into multiple step angles, the set angle value may be expressed as a level of musculoskeletal injury that may occur due to a waist bending motion, and may also be expressed as specific examples such as safety, caution, and risk. In addition, as in the x-axis time y-axis waist twist angle graph user interface 502', the set angle value for a movement having positive and negative measurement values is applied simultaneously as a positive set angle value and a negative set angle value. The set angle value may be used as a basis for determining whether the wearable robot wearer moves within a range of motion with a low risk of musculoskeletal injury.

**Waist injury risk assessment method based on posture recognition sensor**

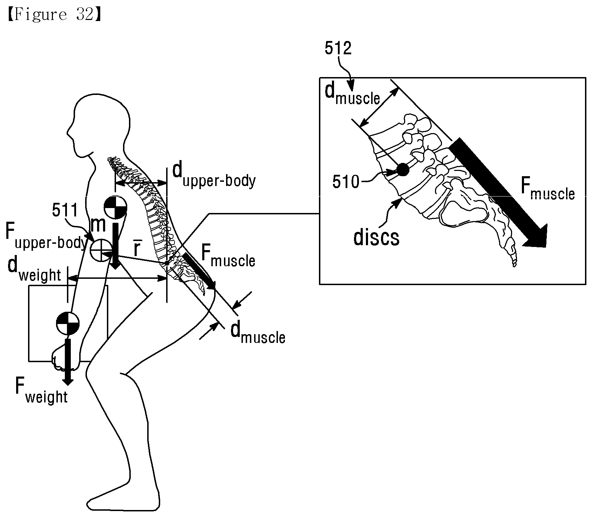

FIG. 32 is a view analyzing the force-moment applied to the waist due to the wearer's upper body and a heavy object during the operation of lifting the object.

As illustrated in FIG. 32, the moment and force applied to the wearer's waist may specifically mean calculating the moment and force applied to a wearer's waist L5/S1 joint 510. A muscle distance vector 512 shown in FIG. 32 may be assumed to be 0.1m.

$$- \bar{d}_{muscle} \times \bar{F}_{muscle} = \bar{r} \times m\bar{a} + I * \bar{\alpha}$$
$$= m * \{\bar{r} \times (\bar{r} \times \bar{\alpha} + \bar{g})\} + I * \bar{\alpha}$$

As illustrated in FIG. 32, $\bar{r}$ the value in the moment calculation formula means the position vector from the wearer's waist L5/S1 joint 510 to a center of gravity 511 of the wearer's upper body and the heavy object. Additionally, in the above moment calculation formula, the m value means a mass of the wearer's upper body and the heavy object, and $\bar{a}$ the value means a linear acceleration of the center of gravity 511 of the wearer's upper body and the heavy object. The I value refers to a moment of inertia of the wearer's upper body and heavy objects, and $\bar{\alpha}$ the value is an angular acceleration of the wearer's upper body and heavy goods. Accordingly, compressive force may be detected from the moment calculation formula.

**FIG 30, FIG 31**

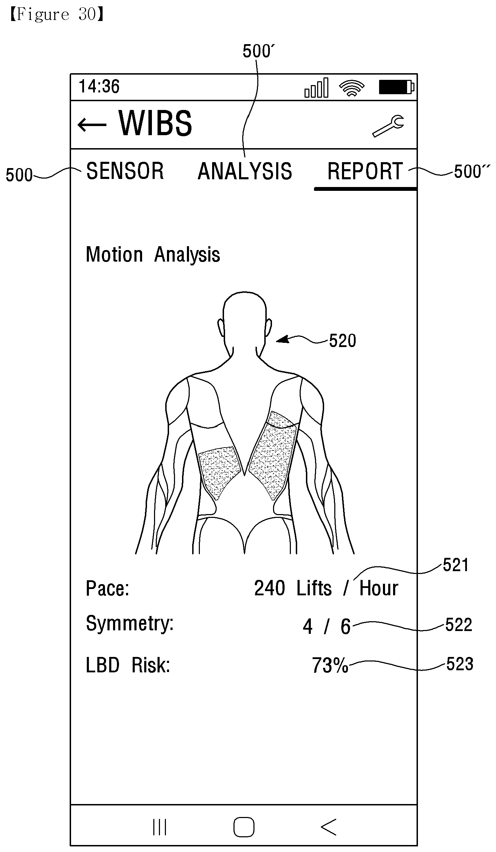

FIG 30 is a view illustrating the wearer movement analysis report user interface in the result report user interface regarding the movement of the wearable robot wearer according to the present invention.

As illustrated in FIG 30, a wearer movement report user interface 500" may be provided on the top bar of the user interface. When the user taps the wearer movement report user interface 500", the wearer's waist injury risk illustration user interface 520, the wearer's work pace information providing user interface 521, the wearer's work balance information providing user interface 522, and the wearer's waist injury risk information providing user interface 523 may be provided.

According to one embodiment of the present invention, a wearer movement report user interface 500" may be provided on the top bar of the user interface. When the user taps the wearer movement report user interface 500", the wearer's waist injury risk illustration user interface 520 may be provided.

Specifically, the wearer's waist injury risk illustration user interface 520 may visually indicate whether a left or right side of the wearer's waist L5/S1 joint 510 has a higher risk of injury due to the motion of twisting the waist. Specifically, when the wearer's waist bending angle is 30 degrees or more, the waist twisting angle may be extracted and normalized to an average twist range, from a positive angle of 40 degrees to a negative angle of 40 degrees. Then, based on the wearer's waist L5/S1 joint 510, a ratio of the risk of injury applied to the left and right sides of the wearer's waist L5/S1 joint 510 is calculated. Accordingly, the ratio may be displayed on the wearer's waist injury risk illustration user interface 520.

According to another embodiment of the present invention, a wearer movement report user interface 500" may be provided on the top bar of the user interface. When the user taps the wearer movement report user interface 500", a wearer work pace information providing user interface 521 may be provided.

Specifically, the wearer's work pace information providing user interface 521 may provide work pace information by estimating a wearer's workload for one hour. For a specific example, if it takes the wearer 15 seconds to perform one task, such as bending at the waist, the wearer may perform 240 movements in one hour. Therefore, as illustrated in FIG. 30, the wearer's work pace information providing user interface 521 may perform 240 Lifts/Hour.

According to another embodiment of the present invention, a wearer movement report user interface 500" may be provided on the top bar of the user interface. When the user taps the wearer movement report user interface 500", a wearer work balance information providing user interface 522 may be provided.

Specifically, based on the wearer's waist L5/S1 joint 510 of the above-described wearer's waist injury risk illustration user interface 520, a ratio of the risk of injury applied to the left and right sides of the wearer's waist L5/S1 joint 510 may be shown. As illustrated in FIG. 30, the wearer's waist L5/S1 joint 510 of the above-described wearer's waist injury risk illustration user interface 520 may be used as a reference. Accordingly, when the ratio of the risk of injury applied to the left and right sides of the wearer's waist L5/S1 joint 510 is 4 to 6 on the left and right sides, the ratio may be expressed as 4 / 6.

According to another embodiment of the present invention, a wearer movement report user interface 500" may be provided on the top bar of the user interface. When the user taps the wearer movement report user interface 500", the wearer's waist injury risk information providing user interface 523 may be provided. Specifically, the risk of waist injury may be calculated by calculating the moment (M) using the moment calculation formula described above and substituting the moment into the following equation.

$$D = \frac{1}{902,416} \sum_{i=1}^{n} e^{0.038(M)+0.32}$$

The above equation is used to calculate a waist micro damage rate D. After substituting the moment M into the above equation to obtain the waist micro damage rate D, operations of substituting the waist micro damage rate D into the following equation, performing linear regression, and calculating the waist injury risk R may be performed.

$$Y = 1.72 + 1.03 \log_{10} D$$

$$R = \frac{e^Y}{1 + e^Y}$$

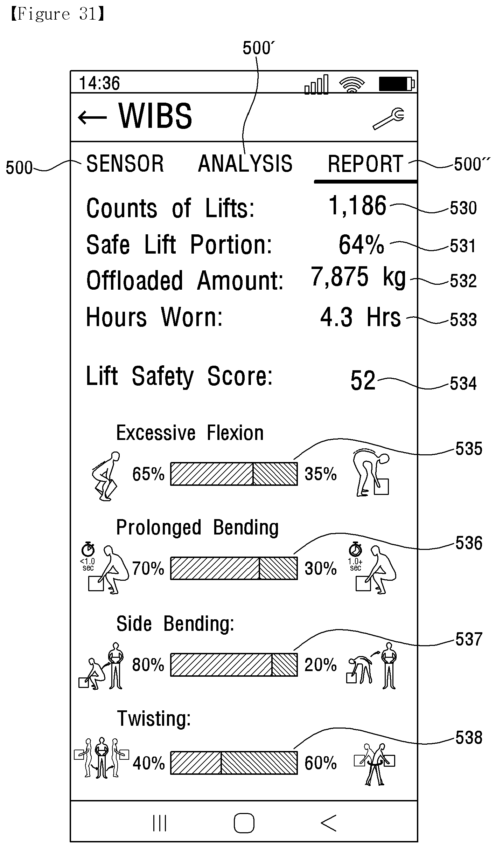

FIG. 31 is a view illustrating a wearer movement safety score report user interface in a result report user interface regarding the movement of the wearable robot wearer according to the present invention.

As illustrated in FIG. 31, a wearer movement report user interface 500" may be provided on the top bar of the user interface. When the user taps the wearer movement report user interface 500", a user interface 530 for providing information on the wearer's total number of daily movements, a user interface 531 for providing information on the wearer's safe operation ratio, and a user interface 532 for providing information on the wearer's daily load reduction amount may be provided. A user interface 533 for providing information on the wearing time of the wearable robot may be provided. Additionally, a user interface 534 for providing information on the wearer's daily motion safety score, a user interface 535 for providing information on the wearer's daily excessive waist bending rate, and a user interface 536 for providing information on the wearer's daily long-time waist bending rate may be provided. A user interface 537 for providing information on the wearer's daily side waist bending rate and a user interface 538 for providing information on the wearer's daily waist twisting rate may be provided.

According to one embodiment of the present invention, a wearer movement report user interface 500" may be provided on the top bar of the user interface. When the user taps the wearer movement report user interface 500", a user interface 530 for providing information on the wearer's total number of daily movements may be provided. The user interface 530 for providing information on the total number of daily movements of the wearer may calculate the total number of daily movements of the wearer and provide information in the form of Arabic numerals. As illustrated in FIG. 31, when the wearer operates a total of 1,186 times per day, the user interface 530 for providing information on the total number of movements per day of the wearer may be provided as 1,186.

According to one embodiment of the present invention, a wearer movement report user interface 500" may be provided on the top bar of the user interface. When the user taps the wearer movement report user interface 500", a wearer safety movement rate information providing user interface 531 may be provided.

Specifically, the wearer safety operation ratio information providing user interface 531 may be calculated by subtracting the average of the ratio of a user interface 535 for providing information on the wearer's daily excessive waist bending rate, a user interface 536 for providing information on the wearer's daily prolonged waist bending rate, a user interface 537 for providing wearer daily side waist bending rate information, a user interface 538 for providing wearer daily waist twist rate information from 100%.

More specifically, the wearer's daily excessive waist bending rate information providing user interface 535 may visualize and display a rate of excessive back bending. As illustrated in FIG. 31, when the excessive waist bending ratio is 35% of the case of non-excessive waist bending, the rate of excessive back bending may be expressed as a bar graph.

In addition, a user interface 536 for providing information on the wearer's daily prolonged waist bending rate may be expressed as a bar graph as illustrated in FIG. 31 when a ratio of the wearer's waist bending time for more than 1 second is 30% of the wearer's waist bending time of less than 1 second. The user interface 537 for providing information on the daily side bending rate of the wearer may be expressed as a bar graph when a rate of the wearer bending the waist in a side direction is 20% of a case in which the wearer bends the waist in a forward direction. The wearer's daily waist twisting rate information providing user interface 538 may be expressed as a bar graph when the wearer's waist twisting rate is 60% of a case in which the wearer does not twist his or her waist because the wearer moves a torso itself.

According to one embodiment of the present invention, a wearer movement report user interface 500" may be provided on the top bar of the user interface. When the user taps the wearer movement report user interface 500", a user interface 532 for providing information on a wearer's daily load reduction amount may be provided.

Specifically, a user interface 532 for providing information on the wearer's daily load reduction amount may represent a value obtained by multiplying the Arabic numerals of the user interface 530 for providing information on the total number of daily movements of the wearer by 6.64 kg, which is a load reduction effect due to the wearable robot. However, the load reduction effect due to the wearable robot is not limited to 6.64 kg. Therefore, when the value of the load reduction effect due to the wearable robot varies, the value provided to the wearer's daily load reduction amount information providing user interface 532 may also vary.

According to one embodiment of the present invention, a wearer movement report user interface 500" may be provided on the top bar of the user interface. When the user taps the wearer movement report user interface 500", a user interface 533 for providing information on the wearer's wearable robot wearing time may be provided. Specifically, the user interface 533 for providing information on a time of the wearer wearing the wearable robot may provide information about a time of the wearer wearing the wearable robot.

According to one embodiment of the present invention, a wearer movement report user interface 500" may be provided on the top bar of the user interface. When the user taps the wearer movement report user interface 500", a wearer daily movement safety score information providing user interface 534 may be provided.

Specifically, the wearer's daily motion safety score information providing user interface 534 may provide a value obtained by subtracting a daily average of the wearer's back injury risk provided by the wearer's back injury risk information providing user interface 523 from 100. As a specific example, when the daily average of the wearer's back injury risk provided by the wearer's back injury risk information providing user interface 523 is 48, as illustrated in FIG. 31, the wearer's daily motion safety score information providing user interface 534 may be expressed as 52.

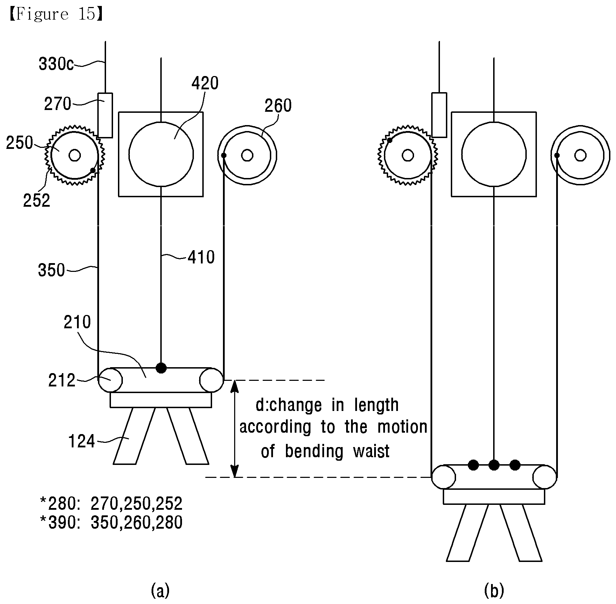

FIG. 15 is a view for explaining the clutch unit of the waist muscular strength assisting unit of the wearable robot that assists waist muscular strength according to another embodiment of the present invention.

In the above-described embodiment, the supporting force is transmitted to the back muscles and stiffness is adjusted by the first elastic member 205 and the second elastic member 208, which are passive elements. On the other hand, in this embodiment, the stiffness may be adjusted at the same time by transmitting supporting force to the back muscles using a small actuator 420.

In this embodiment, the wearable robot that assists waist muscular strength may include an upper wearing unit 110, a waist muscular strength assisting unit 200, and a lower wearing unit 120, and may further include a clutch unit 390.

Since the configurations of the upper wearing unit 110, the lower wearing unit 120, and the clutch unit 390 are the same as the above-described embodiment, a detailed description thereof will be omitted.

FIG. 15 is a view for explaining the clutch unit of the waist muscular strength assisting unit of the wearable robot that assists waist muscular strength according to another embodiment of the present invention.

According to one embodiment of the present invention, the waist muscular strength assisting unit 200 may include a wire 410, a moving part 210, and an actuator 420.

As illustrated in FIG. 15, the wire 410 may have a lower end connected to the moving part 210 and an upper end connected to the actuator 420. Similarly to the above-described embodiment, the moving part 210 may move up and down according to the movement of the waist, and the connecting part 124 of the lower wearing unit 120 may be connected to the moving part 210.

According to one embodiment of the present invention, the actuator 420 may actively adjust the stiffness of the wire 410 by adjusting the tension of the wire 410. Specifically, the actuator 420 may include a motor, a pneumatic actuator, a hydraulic actuator, etc. In this case, more diverse stiffness may be implemented than the above-described embodiment.

As illustrated in FIG. 15, when the moving part 210 moves up and down according to the movement of the wearer, the length of the wire 420 between the actuator 420 and the moving part 210 is variable. When the length of the wire 410 changes, a constant tension may be applied by the actuator 420. Here, the tension value may be changed to adjust stiffness.

Description of manipulation device 401

Hereinafter, an operating principle of the manipulation device 401 will be described in detail.

The manipulation device 401 relates to a manipulation device 401 of a wearable robot for controlling operations of a first manipulation target unit 400 and a second manipulation target unit 4100 provided on the wearable robot. The first manipulation target unit 400 may include the waist muscular strength assisting unit 200 of the wearable waist assistance robot. The second manipulation target unit 400' may include the clutch unit 390 of the wearable waist assistance robot.

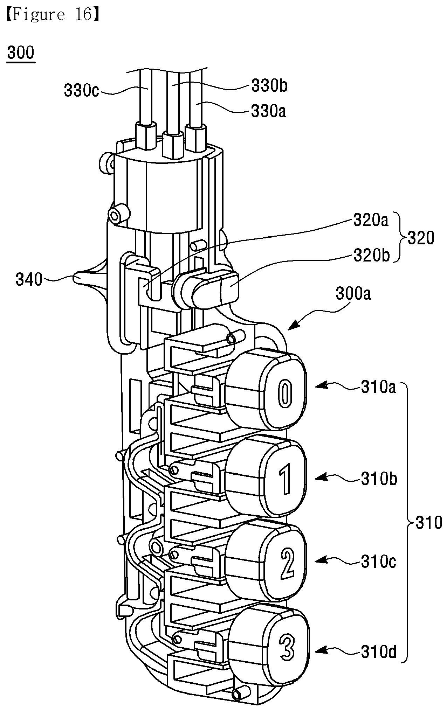

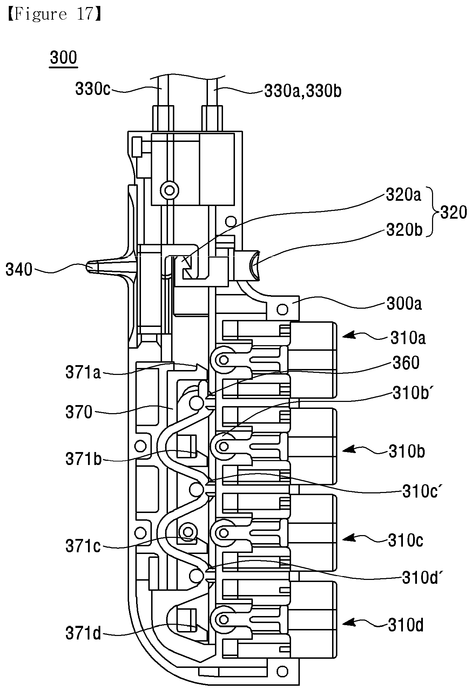

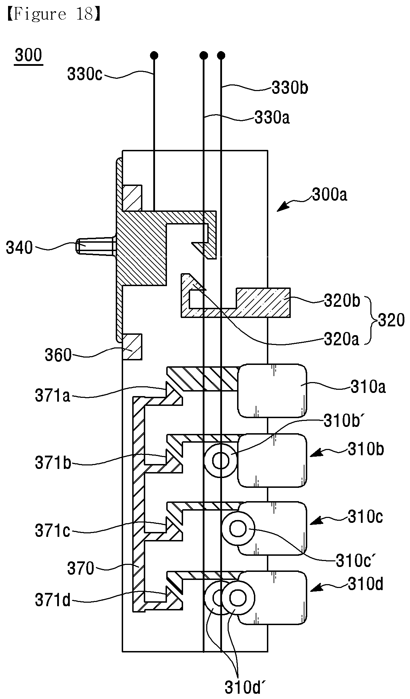

FIGS. 16 and 17 are views illustrating the manipulation device of the wearable robot with a front cover of a manipulation device housing 300a removed. FIG. 18 is a view for explaining a configuration of the manipulation device of the wearable robot according to the present invention.

As illustrated in FIGS. 16 and 17, the manipulation device 401 may include a manipulation device housing 300a, a 1-1 cable 330a, a 1-2 cable 330b, and a second cable 330c. Additionally, the manipulation device 401 may include a clutch unit operation button 320, a manipulation lever 340, and a stiffness adjustment button 310.

FIG. 26 is a block diagram for explaining operations of the first manipulation target unit and the second manipulation target unit according to an embodiment of the present invention.

As illustrated in FIG. 26, the first manipulation target unit 400 may be selected as one of MODE1, MODE2, and MODE3 by pulling at least one of the 1-1 cable 330a and the 1-2 cable 330b. The first manipulation target unit 400 may be selected as MODE0 by releasing both the 1-1 cable 330a and the 1-2 cable 330b.

According to one embodiment of the present invention, the manipulation device housing 300a supports each of a first stiffness adjustment button 310b, a second stiffness adjustment button 310c, a third stiffness adjustment button 310d, a zero stiffness adjustment button 310a, an operation lever 340, and a clutch unit operation button 320 in a movable state. Accordingly, a through hole may be formed at an upper end thereof for introducing the first cables 330a and 330c into an inner space. This manipulation device housing 300a is preferably designed in a shape that a user may easily hold with his or her hand.

As illustrated, the 1-1 cable 330a and the 1-2 cable 330b may be arranged parallel to each other. One end may be connected to the first manipulation target unit 400, and the other end may be fixed to the bottom of the manipulation device housing 300a. Preferably, the other ends of the 1-1 cable 330a and the 1-2 cable 330b may be introduced into the manipulation device housing 300a through the upper through hole and fixed to an inner lower end of the manipulation device housing 300a. Accordingly, the 1-1 cable 330a and the 1-2 cable 330b may each be disposed to penetrate the inner space of the manipulation device housing 300a. The first stiffness adjustment button 310b, the second stiffness adjustment button 310c, the third stiffness adjustment button 310d, and the 0th stiffness adjustment button 310a are arranged side by side on one side of the manipulation device housing 300a and supported in a movable state on the manipulation device housing 300a so that at least one of the 1-1 cable 330a connected to the first manipulation target unit 400 and the 1-2 cable 330b are pulled or released depending on a moving position.

1st stiffness adjustment button

According to the present invention, the first stiffness adjustment button 310b may include a first pressing portion 310b'. The first pressing portion 310b' may be placed on one side of the 1-1 cable 330a. A portion of the first stiffness adjustment button 310b is exposed to the outside of the manipulation device housing 300a. While supporting the first pressing portion 310b', the first stiffness adjustment button 310b may move in a direction of pressing the 1-1 cable 330a on the manipulation device housing 300a. Preferably, the first stiffness adjustment button 310b may move in a direction crossing an extension direction of the 1-1 cable 330a.

According to one embodiment of the present invention, when the first stiffness adjustment button 310b advances toward the 1-1 cable 330a, the first pressing portion 310b' presses the 1-1 cable 330a. Accordingly, one end of the 1-1 cable 330a connected to the first manipulation target unit 400 is pulled. When the first stiffness adjustment button 310b returns to an original position thereof, the first pressing portion 310b' may be spaced apart from the 1-1 cable 330a. Accordingly, a pulled state of the 1-1 cable 330a may be released. Preferably, the first stiffness adjustment button 310b may be elastically supported in a backward direction by an elastic member (not shown) disposed between the manipulation device housing 300a and the first stiffness adjustment button 310b.

**Second stiffness adjustment button**

As illustrated in FIG. 18, the second stiffness adjustment button 310c may have the same configuration as the first stiffness adjustment button 310b. The first pressing portion 310b' of the first stiffness adjustment button 310b may be disposed on one side of the 1-1 cable 330a. In contrast, the second stiffness adjustment button 310c may differ in that the second pressing portion 310c' is disposed on one side of the 1-2 cable 330b. Additionally, the third stiffness adjustment button 310d also has the same configuration as the first stiffness adjustment button 310b. Additionally, there may be a difference in that the third pressing portion 310c' is disposed on one side of the 1-1 cable 330a and one side of the 1-2 cable 330b.

Third **stiffness adjustment button**

As illustrated in FIG. 18, the third stiffness adjustment button 310d may have the same configuration as the first stiffness adjustment button 310b. Unlike the first pressing portion 310b' and the second pressing portion 310c', there may be a difference in that the third pressing portion 310d' is disposed on each of one side of the 1-1 cable 330a and one side of the 1-2 cable 330b.

As illustrated, the first stiffness adjustment button 310b, the second stiffness adjustment button 310c, and the third stiffness adjustment button 310d may be spaced apart from each other along a first axis direction (z-axis in FIG. 16) parallel to a longitudinal direction of the 1-1 cable 330a and 1-2 cable 330b. Accordingly, the first stiffness adjustment button 310b, the second stiffness adjustment button 310c, and the third stiffness adjustment button 310d may be arranged to be movable with respect to a second axis direction (x-axis in FIG. 1) that crosses the first axis. Accordingly, the 1-1 cable 330a and the 1-2 cable 330b may be spaced apart from each other with respect to a third axis direction (y-axis in FIG. 1) that crosses the first and second axes.

## Description of each mode of the manipulation device

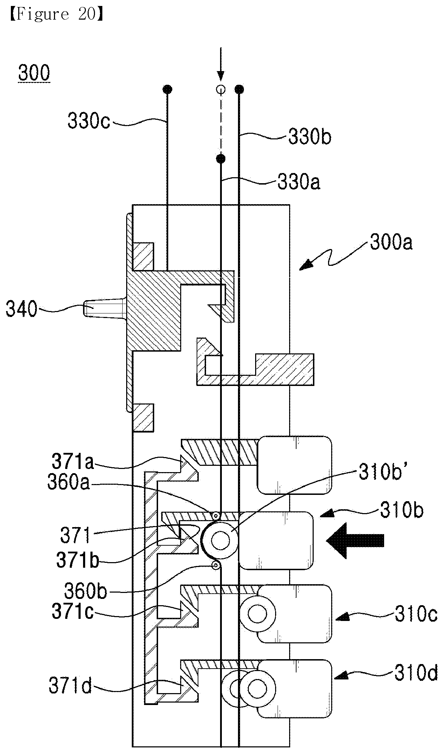

FIGS. 20 to 25 are views illustrating a state in which each mode is set by pulling or releasing the 1-1 cable 330a or the 1-2 cable 330b of the manipulation device according to the present invention.

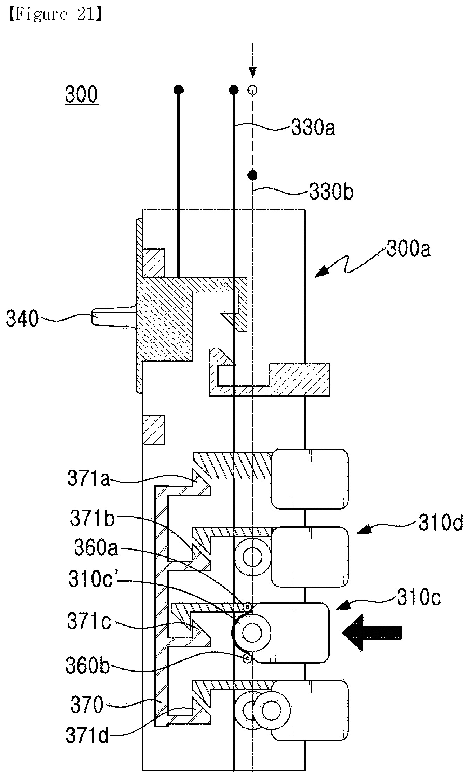

As illustrated in FIGS. 20 and 21, an upper support part 360a and a lower support part 360b may be disposed in the inner space of the manipulation device housing 300a. Specifically, the upper support part 360a and the lower support part 360b may support the other side of the 1-1 cable 330a and the other side of the 1-2 cable 330b at both sides of a portion corresponding to the first pressing portion 310b', the second pressing portion 310c', and the third pressing portion 310d'.

Specifically, at a position corresponding to the first pressing portion 310b', the upper support portion 360a and the lower support portion 360b, which are spaced apart from each other, may support the other side of the 1-1 cable 330a. At a position corresponding to the second pressing portion 310c', the upper support part 360a and the lower support part 360b, which are spaced apart from each other, may support the other side of the 1-2 cable 330b. At a position corresponding to the third pressing portion 310d', the upper support part 360a and the lower support part 360b, which are spaced apart from each other, may support the other sides of the 1-1 cable and the 1-2 cable 330b.

Preferably, each of the first pressing portion 310b', the second pressing portion 310c', the third pressing portion 310d', and the support part 360 may have a roller shape to minimize friction with the 1-1 cable 330a or the 1-2 cable 330b in a process of pulling or releasing either the 1-1 cable 330a or the 1-2 cable 330b.

According to one embodiment of the present invention, 0th stiffness adjustment button 310a may restrain or release a position of the first stiffness adjustment button 310b, the second stiffness adjustment button 310c, or the third stiffness adjustment button 310d while the first stiffness adjustment button 310b, the second stiffness adjustment button 310c, or the third stiffness adjustment button 310d presses at least one of the 1-1 cable 330a and the 1-2 cable 330b.

According to one embodiment of the present invention, the 0th stiffness adjustment button 310a may be operated manually to release engagement between the connecting bar hook 371 and the first stiffness adjustment button 310b, the second stiffness adjustment button 310c, and the third stiffness adjustment button 310d. A 0th connecting bar hook 371a is disposed at a position corresponding to the 0th stiffness adjustment button 310a. Also, a first connecting bar hook 371b is disposed at a position corresponding to the first stiffness adjustment button 310b. A second connecting bar hook 371c is disposed at a position corresponding to the second stiffness adjustment button 310c. A third connecting bar hook 371d may be disposed at a position corresponding to the third stiffness adjustment button.

Preferably, when the first stiffness adjustment button 310b, the second stiffness adjustment button 310c, or the third stiffness adjustment button 310d is engaged with each connecting bar hook 371 at a position moved in a pressing direction, the 0th stiffness adjustment button 310a may be moved in a direction of releasing the engagement between the first stiffness adjustment button 310b, the second stiffness adjustment button 310c, and the third stiffness adjustment button 310d and each connecting bar hook 371.

As illustrated in FIG. 20, the connecting bar hooks 371 may be integrated by being connected to each other by the connecting bar 370. According to one embodiment of the present invention, when the first stiffness adjustment button 310b, the second stiffness adjustment button 310c, or the third stiffness adjustment button 310d is pressed and moves forward, the plurality of connecting bar hooks 371 may descend from a first position to a second position and then move back to the first position. Preferably, the first position may be a position higher than the second position and may be a position capable of restraining the first stiffness adjustment button 310b, the second stiffness adjustment button 310c, or the third stiffness adjustment button 310d. Additionally, the second position may be a position at which the restraint may be released.

Therefore, when the 0th stiffness adjustment button 310a is pressed by an external force while the connecting bar hook 371 and the first stiffness adjustment button 310b, the second stiffness adjustment button 310c, or the third stiffness adjustment button 310d are engaged, the connecting bar hook 371 is lowered to the second position. Accordingly, the engagement between the connecting bar hook 371 and the first stiffness adjustment button 310b, the second stiffness adjustment button 310c, or the third stiffness adjustment button 310d may be released. Preferably, the connecting bar hook 371 may be elastically supported toward the first position by an elastic member (not shown) disposed between the operating device housing 300a and the connecting bar hook 371.

Preferably, the connecting bar hook 371 may be elastically supported toward the first position by the elastic member (not shown) disposed between the operating device housing 300a and the connecting bar hook 371. According to the present invention, the 0th stiffness adjustment button 310a may be pressed by an external force to move the plurality of connecting bar hooks 371a, b, c, and d connected to the connecting bar 370 to the second position. As illustrated, the 0th stiffness adjustment button 310a may have the same shape as the first stiffness adjustment button 310b, the second stiffness adjustment button 310c, or the third stiffness adjustment button 310d and may be disposed above the first stiffness adjustment button 310b. The 0th connecting bar hook 371a may be additionally disposed at a position corresponding to the 0th stiffness adjustment button 310a.

That is, the 0th stiffness adjustment button 310a may move the 0th connection bar hook 371a to the second position while advancing toward the 0th connection bar hook 371a and be elastically supported in the backward direction by the elastic member (not shown) disposed between the manipulation device housing 300a and the 0th stiffness adjustment button 310a. According to one embodiment of the present invention, any one of the first stiffness adjustment button 310b, the second stiffness adjustment button 310c, and the third stiffness adjustment button 310d may be advanced. In this case, any one pressing unit of the first stiffness adjustment button 310b, the second stiffness adjustment button 310c, or the third stiffness adjustment button 310d may press either the 1-1 cable 330a or the 1-2 cable 330b. Here, a connection ring portion of any one of the first stiffness adjustment button 310b, the second stiffness adjustment button 310c, and the third stiffness adjustment button 310d may be engaged and restrained with each connection bar hook 371a, b, c, d corresponding to each stiffness adjustment button.

Then, when another stiffness adjustment button 310 is selected and pressed, the integrated connection bar hook 371 moves to the second position at the same time in the process of engaging the pressed stiffness adjustment button 310 with the connection bar hook 371. Afterwards, since it is moved to the first position again, the constraint of the previously constrained stiffness adjustment button 310 is released, and the connecting ring portion of the selected stiffness adjustment button 310 may be newly constrained. Preferably, the connecting ring portion may be a portion connected to the first stiffness adjustment button 310b, the second stiffness adjustment button 310c, and the third stiffness adjustment button 310d each having a ring shape and may be disposed inside the operating device housing 300a.

## Control of the second manipulation target unit 400'

FIG. 26 is a block diagram for explaining the operation of the first manipulation target unit and the second manipulation target unit according to an embodiment of the present invention.

As illustrated, the manipulation target unit may include a first manipulation target unit 400 and a second manipulation target unit 400'. The first manipulation target unit 400 may be the waist muscular strength assisting unit 200 of a wearable waist assistance robot. The second manipulation target unit 400' may be set as the clutch unit 390 of the wearable waist assistance robot, but is not limited thereto.

According to the present invention, the second cable 330c is for controlling the second manipulation target unit 400' of the wearable robot. One end may be connected to the second manipulation target unit 400', and the other end may be introduced into the inner space of the manipulation device housing 300a via a through hole of the manipulation device housing 300a.

According to one embodiment of the present invention, the manipulation lever 340 is in a state in which the other end of the second cable 330c introduced into the manipulation device housing 300a is fixed. The manipulation lever 340 is disposed on the other side of the manipulation device housing 300a to be movable in a direction parallel to a longitudinal direction of the second cable 330c. Accordingly, the second cable 330c connected to the second manipulation target unit 400' may be pulled or released depending on a movement position.

In this embodiment, for example, the manipulation lever 340 pulls or releases the second cable 330c while sliding in the longitudinal direction of the second cable 330c. However, it may be possible to apply various types of movement methods, such as pivoting or rotating to pull or release the second cable 330c.

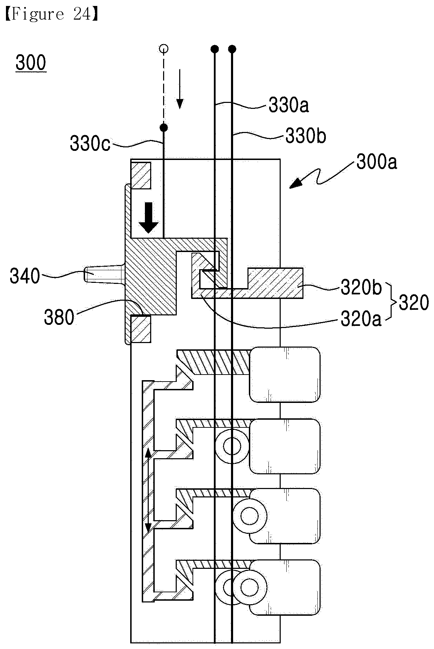

As illustrated in FIG. 24, guide holes 380 that may limit the movement range of the manipulation lever 340 may be formed in the manipulation device housing 300a to be spaced apart from each other above and below the manipulation lever 340. The manipulation lever 340 is disposed within a plurality of guide holes 380 and may move up and down.

According to one embodiment of the present invention, the clutch unit operation button 320 is used to restrict a position of the manipulation lever 340 when the second cable 330c is pulled. The clutch unit operation button 320 includes a clutch unit operation button hook 320a that may restrict the position of the manipulation lever 340 at a position moved in a direction in which the second cable 330c is pulled. Additionally, the clutch unit operation button 320 may include a release button 320b that may move the clutch unit operation button hook 320a in a direction to release the restraint of the manipulation lever 340.

According to one embodiment of the present invention, the release button 320b may move in a direction crossing the longitudinal direction of the second cable 330c on one side of the manipulation device housing 300a. The clutch unit operation button hook 320a may be moved downward so that the manipulation lever 340 may pull the second cable 330c. Accordingly, the clutch unit operation button hook 320a may be engaged with the manipulation lever 340 to restrict the position of the manipulation lever 340. As the release button 320b moves forward in the housing, the restraint on the manipulation lever 340 may be released.

Additionally, the release button 320b may be elastically supported in the backward direction by an elastic member (not shown) disposed between the manipulation device housing 300a and the manipulation lever 340. The manipulation lever 340 may be elastically supported in a direction in which the second cable 330c is released by an elastic member (not shown) disposed between the manipulation device housing 300a and the manipulation lever 340.

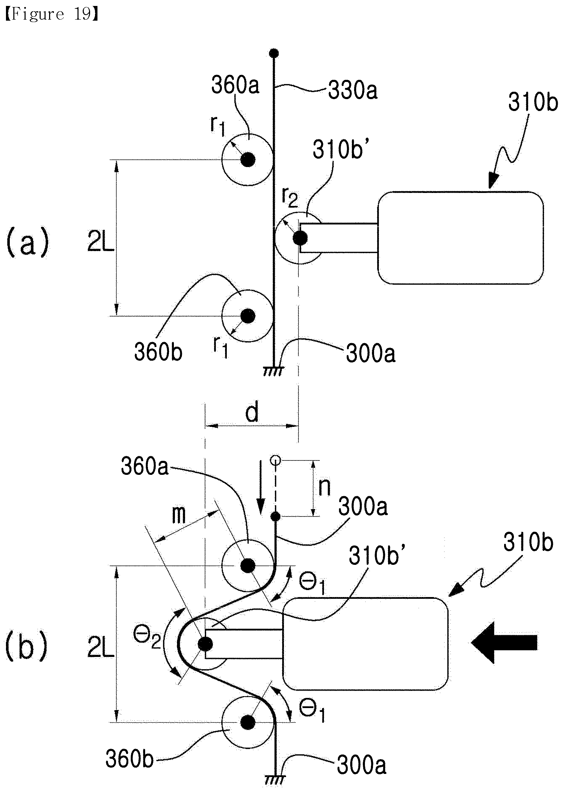

FIGS. 19 to 23 are views illustrating states in which each mode is set by pulling or releasing the first cable 330a, b according to the manipulation device of the wearable robot of the present invention. FIG. 24 is a view illustrating a state in which the pull of the second cable 330 $_{\bar{\wedge}}$ according to the manipulation device of the wearable robot of the present invention is released.

**The process of pulling or releasing the first cable**

First, the process of pulling or releasing the first cables 330a and 330b will be described with reference to FIGS. 19 to 23.

As illustrated in FIG. 19, the user may press the first stiffness adjustment button 310b disposed on one side of the manipulation device housing 300a to set MODE1 for the first manipulation target unit 400 of the wearable robot. According to one embodiment of the present invention, the first stiffness adjustment button 310b may be moved forward in a direction intersecting the 1-1 cable 330a by the user's manipulation. Here, the first pressing portion 310b' may move the 1-1 cable 330a, which is arranged across the inner space of the operating device housing 300a, in a lateral direction while pressing the 1-1 cable 330a.

Here, the other side of the 1-1 cable 330a pressed by the first pressing portion 310b' is supported by the upper support part 360a and the lower support part 360b. The first pressing portion 310b' advances through the space between the upper support part 360a and the lower support part 360b. Here, the length of the 1-1 cable 330a disposed between the upper support part 360a and the lower support part 360b increases. Accordingly, the 1-1 cable 330a connected to the first manipulation target unit 400 of the wearable robot is pulled, and MODE1 may be selected. Specifically, the support part 360 may include an upper support part 360a and a lower support part 360b. The upper support part 360a and the lower support part 360b may simultaneously support both sides of the first pressing portion 310b' while the first pressing portion 310b' moves forward.

According to one embodiment of the present invention, the first stiffness adjustment button 310b, which moves forward by an external force, may press the first pressing portion 310b' to the 1-1 cable 330a. Here, as the forward position is restricted by engaging the first connecting bar hook 371b, the MODE1 setting state for the first manipulation target unit 400 may be maintained. Specifically, in the process of pulling the 1-1 cable 330a using the first stiffness adjustment button 310b, the change in length n of the 1-1 cable 330a may be obtained as follows.

$$m = \sqrt{L^2 + (d - r_2 - r_1)^2 - (r_1 + r_2)^2}$$

$$k = 4\pi r_i \frac{\theta_1}{360} + 4\pi r_2 \frac{\theta_2}{360} + 2m$$

$$n = k - 2L$$

Here, m may be a gap between the contact point of the upper support part 360a and the lower support part 360b and the contact point of the first pressing portion 310b' which contacts the 1-1 cable c1a while the first pressing portion 310b' presses the 1-1 cable 330a, as illustrated in FIG. 19(b). L may be a gap between the contact point of the upper support part 360a and the lower support part 360b and the contact point of the first pressing portion 310b' which contacts the 1-1 cable 330a in a state where the first pressing portion 310b' does not pressurize the 1-1 cable 330a, as illustrated in FIG. 19(a).

In addition, d may be a distance moved by the first pressing portion 310b' in FIG 19(b), $r_1$ may be a radius of the upper support part 360a and the lower support part 360b, and $r_{2\,may\,be}$ the 1 may be a radius of the pressing portion 310b'.

In addition, as illustrated in FIG. 19(b), in a state in which the first pressing portion 310b' presses the 1-1 cable 330a, k may be a length of the 1-1 cable 330a disposed between the upper support part 360a and the lower support part 360b.

In addition, θ1 may be an angle of the area in which the 1-1 cable 330a is in contact with an outer peripheral surface of the upper support part 360a and the lower support part 360b. θ2 is a half of an angle of the area in contact with the 1-1 cable 330a among the outer peripheral surfaces of the first pressing portion 310b'. n may be an amount of change in length of the 1-1 cable 330a.

As illustrated in FIG. 21, the user may press the second stiffness adjustment button 310c disposed on one side of the manipulation device housing 300a to set MODE2 for the first manipulation target unit 400 of the wearable robot. As illustrated in FIG. 21, there is a process in which the second stiffness adjustment button 310c moves forward in a direction crossing the 1-2 cable 330b due to an external force. Here, the second pressing portion 310c' presses the 1-2 cable 330b. Accordingly, a length of the 1-2 cable 330b disposed between the upper support part 360a and the lower support part 360b may increase.

Accordingly, the first-second cable 330b of the wearable robot is pulled, and MODE2 may be selected. The second stiffness adjustment button 310c, which has moved forward, is locked in a forward position thereof by engaging with the second connecting bar hook 371c while the second pressing portion 310c' is pressing the 1-2 cable 330b. Accordingly, the MODE2 setting state for the first operation target unit 400 may be maintained. Meanwhile, there is a process of selecting MODE2 from the state in which MODE1 is selected as illustrated in FIG. 20 to MODE2 as illustrated in FIG. 21. Here, when the second stiffness adjustment button 310c is engaged with the second connecting bar hook 371c, the second connecting bar hook 371c may move to the second position and then to the first position. Here, the plurality of connecting bar hooks 371 may be connected by the connecting bar 370 and formed as one unit. Therefore, in the process of engaging the second stiffness adjustment button 310c with the second connecting bar hook 371c, the first stiffness adjustment button 310b, which is previously restrained, may be released.

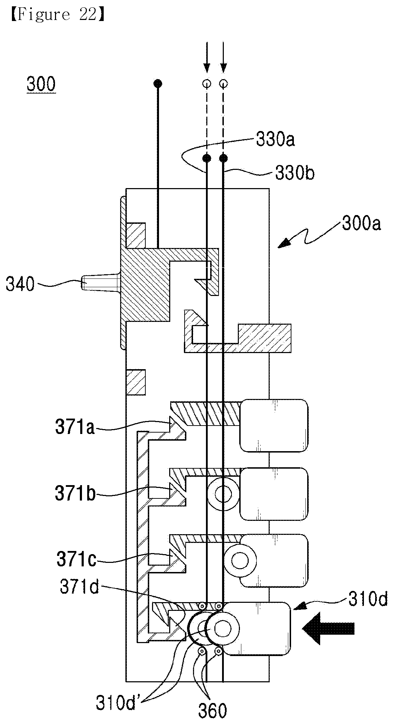

As illustrated in FIG. 22, the user may press the third stiffness adjustment button 310d disposed on one side of the manipulation device housing 300a to set MODE3 for the first manipulation target unit 400 of the wearable robot.

As illustrated, In the process of moving the third stiffness adjustment button 310d forward due to an external force, the third pressing portion 310d' may pressurize each of the 1-1 cable 330a and the 1-2 cable 330b. Accordingly, the lengths of the 1-1 cable 330a and the 1-2 cable 330b disposed between the upper support portion 360a and the lower support portion 360b may respectively increase. Accordingly, the 1-1 cable 330a and the 1-2 cable 330b are pulled simultaneously, and MODE3 may be selected. In addition, the third stiffness adjustment button 310d, which has moved forward, is engaged with the third connecting bar hook 371d and the forward position is restricted, so that the MODE3 setting state for the first manipulation target unit 400 may be maintained.

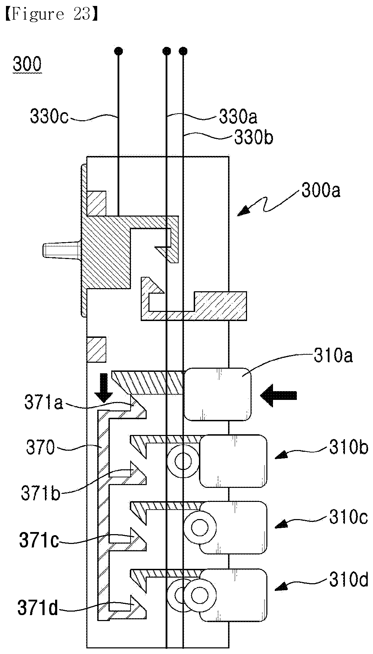

Meanwhile, as illustrated in FIG. 23, the user may press the 0th stiffness adjustment button 310a disposed on one side of the manipulation device housing 300a to set MODE0 for the first manipulation target unit 400 of the wearable robot.

According to one embodiment of the present invention, the 0th stiffness adjustment button 310a, which moves forward by an external force, may move the 0th connecting bar hook 371a to the second position. Here, the connecting bar hooks 371 are connected to each other through the 0th connecting bar hook 371a and the connecting bar 370. Therefore, the restraints on each of the first stiffness adjustment buttons 310b to the third stiffness adjustment buttons 310d may be released, and through this, the previously selected MODE1, MODE2, and MODE3 may be deselected.

Meanwhile, when the external force on the 0th stiffness adjustment button 310a is released, the elastic member that is elastically compressed during the advancement of the 0th stiffness adjustment button 310a is elastically restored. Accordingly, the 0th stiffness adjustment button 310a may be moved backwards and returned to an original position thereof.

The process of pulling or releasing the second cable

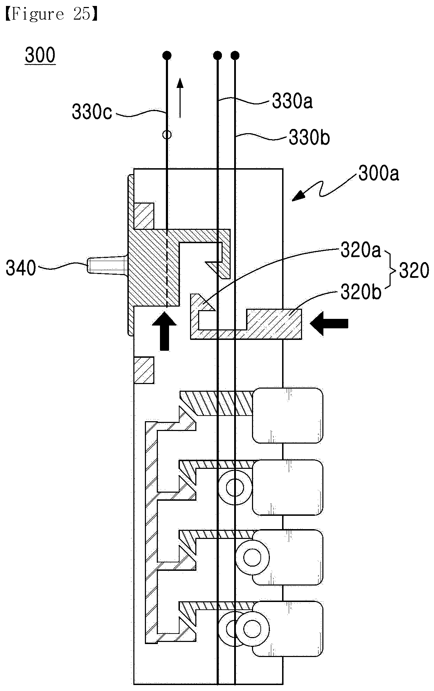

The process of pulling or releasing the second cable 330c will be described with reference to FIGS. 24 and 25.

In this embodiment, the second manipulation target unit 400' of the wearable robot is deactivated while the second cable 330c is pulled. For example, it is activated in a state in which the second cable 330c is released. As illustrated in FIG. 24, the second manipulation target unit 400' is deactivated by pulling the second cable 330c using the manipulation lever 340. Also, as illustrated in FIG. 25, the second manipulation target unit 400' is activated by releasing the pull on the second cable 330c using the clutch unit operation button 320.

As illustrated in FIG. 24, the user may press the manipulation lever 340 disposed on the other side of the manipulation device housing 300a to deactivate the second manipulation target unit 400' of the wearable robot.

As illustrated, the manipulation lever 340 may move downward along the guide hole 380 of the manipulation device housing 300a while fixing the other end of the second cable 330c by the user's manipulation. Accordingly, the second cable 330c is pulled by moving the manipulation lever 340 in the downward direction while the other end is connected to the manipulation lever 340. Accordingly, a function of the second manipulation target unit 400' of the wearable robot may be deactivated.

Here, an amount of change in length of the second cable 330c is set equal to a moving distance of the manipulation lever 340. Therefore, the movement distance of the manipulation lever 340 may be easily designed with respect to the amount of change in the length of the second cable 330c required to deactivate the function of the second manipulation target unit 400'.

Subsequently, the manipulation lever 340, which moves downward, is engaged with the clutch unit operation button hook 320a while pulling the second cable 330c, so that a lowering position may be restricted. Accordingly, the functionally deactivated state of the second manipulation target unit 400' of the wearable robot may be maintained.

As illustrated in FIG. 25, the user may press the release button 320b disposed on one side of the manipulation device housing 300a to activate the function of the second manipulation target unit 400' of the wearable robot.

According to the present invention, the release button 320b is arranged to move in a horizontal direction crossing the second cable 330c, and may move forward in a direction to be recessed into the manipulation device housing 300a by an external force.

In this process, since the clutch unit operation button hook 320a moves together with the release button 320b and is separated from the manipulation lever 340, the restraint on the manipulation lever 340 may be released. Here, since the manipulation lever 340 is elastically supported in the upward direction by an elastic member (not shown), the manipulation lever 340 may be separated from the clutch unit operation button hook 320a and move upward by the elastic force of the elastic member. Accordingly, the function of the second manipulation target unit 400' of the wearable robot may be activated by releasing the pull on the second cable 330c connected to the manipulation lever 340.

According to the above-described embodiment, the manipulation lever 340 is configured to be operated manually. In addition, the power generated from the manipulation lever 340 may be configured to be transmitted to the first manipulation target unit 400 and the second manipulation target unit 400' through a cable. Accordingly, electronic elements such as batteries or drive motors may be excluded, which allows operation without limitation of usage time, lightweight and durability, and easy maintenance.

FIG. 33, FIG. 34

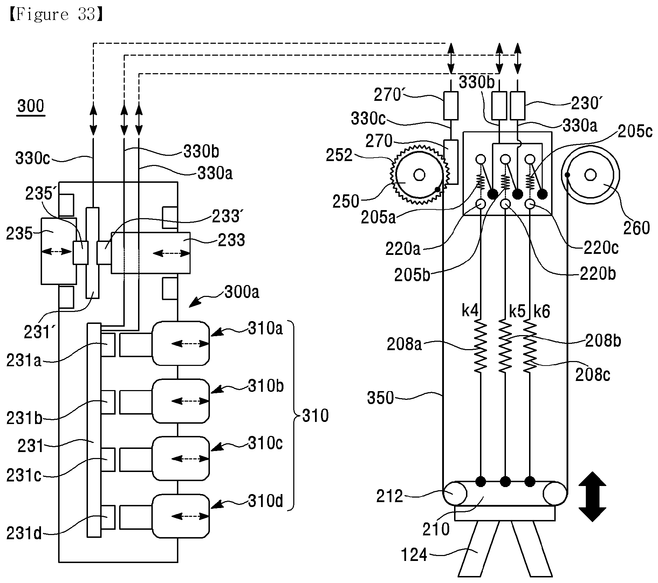

FIG. 33 is a view for explaining a clutch operation and a stiffness adjustment manipulation of each switch of a stiffness adjustment button switch board according to the operation of the stiffness adjustment button according to an embodiment of the present invention.

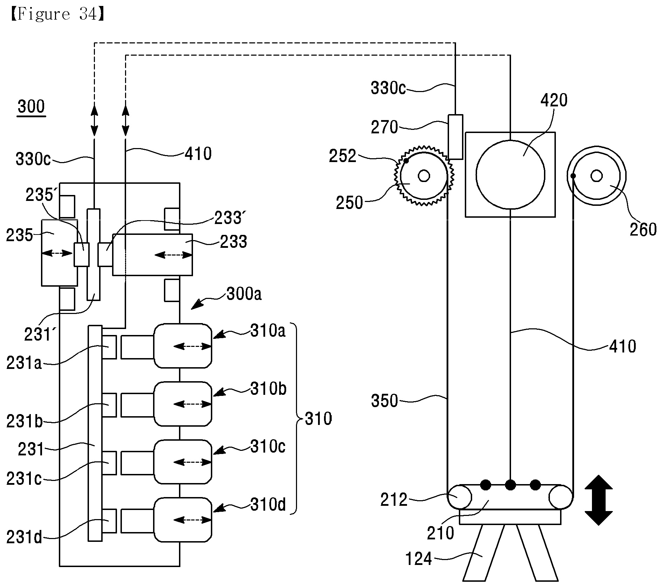

FIG. 34 is a view for explaining the clutch operation of each switch of the stiffness adjustment button switch board according to an operation of the stiffness adjustment button according to an embodiment of the present invention.

As illustrated in FIG 33, a 0th stiffness adjustment button switch 231a, a 1st stiffness adjustment button switch 231b, a 2nd stiffness adjustment button switch 231c, and a 3rd stiffness adjustment button switch 231d may be disposed on the stiffness adjustment button switch board 231. The 0th stiffness adjustment button switch 231a may correspond to the 0th stiffness adjustment button 310a. The first stiffness adjustment button switch 231b may correspond to the first stiffness adjustment button 310b. The second stiffness adjustment button switch 231c may correspond to the second stiffness adjustment button 310c. The third stiffness adjustment button switch 231d may correspond to the third stiffness adjustment button 310d.

According to one embodiment of the present invention, when the user presses the 0th stiffness adjustment button 310a, the 0th stiffness adjustment button switch 231a is pressed. Accordingly, an electrical signal is transmitted wired or wirelessly to the stiffness adjustment unit 230. Therefore, the small actuator module 230' for stiffness adjustment operates by the transmitted electrical signal, so that the small actuator module 230' for stiffness adjustment may drive the locking part 234.

As described above, an elastic force that presses the locking part 234 counterclockwise in the drawing around a predetermined axis is applied by a torsion spring on the upper side of the slider 220. When the sliding cam 232 moves horizontally, the rotation angle varies depending on whether there is contact with the sliding cam 232. Accordingly, the movement of the slider 220 may be restricted by contacting the catching protrusion 222, or the contact with the catching protrusion 222 may be released to release the restraint of the slider 220.

As illustrated in FIG. 13(a), when the first cable 330a is not pulled, the sliding cam 232a contacts the locking part 234 and rotates the locking part 234 clockwise. Here, the coupling between the locking part 234 and the catching protrusion 222 formed on the top surface of the slider 220 may be released. Therefore, the slider 220 may freely move.

On the other hand, as illustrated in FIG. 13(b), when the small actuator module 230' for stiffness adjustment drives the locking unit 234 through the operation of the manipulation device 401. Here, the small actuator module 230' for stiffness adjustment may move the first cable 330a to the left. The sliding cam 232 connected to the first cable 330a may move to the left to release the contact with the locking part 234. Here, the locking part 234 is rotated counterclockwise by the elastic force of the torsion spring formed on the rotation axis of the locking part 234. Accordingly, the locking part 234 and the catching protrusion 222 formed on the upper surface of the slider 220 may be coupled to restrict the movement of the slider 220b.

Here, the sliding cam 232 and the locking part 234 may be arranged for each elastic moving unit. Accordingly, the restraints of the first slider 220a, the second slider 220b, and the third slider 220c of each elastic moving part may be individually controlled.

According to another embodiment of the present invention, when the user presses the 0th stiffness adjustment button 310a, the 0th stiffness adjustment button switch 231a is pressed. Accordingly, an electrical signal is transmitted wired or wirelessly to the stiffness adjustment unit 230. In addition, the small actuator module 230' for stiffness adjustment operates by the transmitted electrical signal, so that the small actuator module 230' for stiffness adjustment may drive the locking part 234 itself. Accordingly, the small actuator module 230' for stiffness adjustment may individually control the restraints of the first slider 220a, the second slider 220b, and the third slider 220c of each elastic moving part.

According to one embodiment of the present invention, when the user presses the first stiffness adjustment button 310b, the first stiffness adjustment button switch 231b is pressed. Accordingly, an electrical signal is transmitted wired or wirelessly to the stiffness adjustment unit 230. Also, the small actuator module 230' for stiffness adjustment operates by the transmitted electrical signal, so that the small actuator module 230' for stiffness adjustment may drive the locking part 234. This embodiment may also be applied to the second stiffness adjustment button 310c and the third stiffness adjustment button 310d.

According to another embodiment of the present invention, a clutch unit on button switch 233' and a clutch unit off button switch 235' may be disposed on the clutch unit operation button switch board 231' illustrated in FIG. 33. The clutch unit on button switch 233' may correspond to the clutch unit on button 233, and the clutch unit off button switch 235' may correspond to the clutch unit off button 235. Specifically, when the clutch unit on button 233 is pressed, an electrical signal is transmitted wired or wirelessly to the small actuator module 270' for clutch operation as the clutch unit on button switch 233' is pressed. In addition, the small actuator module 270' for the clutch operation operates by the transmitted electrical signal, so that the small actuator module 270' for the clutch operation may drive the ratchet gear 270. Even more specifically, the small actuator module 270' for clutch operation may rotate the ratchet gear 270. By rotating the ratchet gear 270, the gear engagement between the ratchet gear 270 and the gear train part 252 is controlled, thereby restricting or allowing the rotation of the second fixing unit 250.

According to another embodiment of the present invention, when the clutch unit off button 235 illustrated in FIG. 34 is pressed, an electrical signal is transmitted wired or wirelessly to the small actuator module 270' for clutch operation as the clutch unit off button switch 235' is pressed. The small actuator module 270' for clutch operation operates by the transmitted electrical signal, so that the small actuator module 270' for clutch operation may drive the ratchet gear 270. Even more specifically, the small actuator module 270' for clutch operation may rotate the ratchet gear 270. By rotating the ratchet gear 270, the gear engagement between the ratchet gear 270 and the gear train part 252 is controlled, thereby restricting or allowing the rotation of the second fixing unit 250.

The scope of the present invention is not limited to the above-described embodiments, but may be implemented in various forms of embodiments within the scope of the appended claims. It is considered to be within the scope of the claims of the present invention to the extent that anyone skilled in the art can make modifications without departing from the gist of the invention as claimed in the claims.

[Explanation of symbols]

110: upper wearing unit
120: lower wearing unit
122: wearing part
124: connecting part
200: waist muscular strength assisting unit
205: first elastic member
208: second elastic member
210: moving part
212: roller
220: slider
222: catching protrusion
230: stiffness adjustment unit
230': small actuator module for stiffness adjustment
231: stiffness adjustment button switch board
231': clutch unit operation button switch board
231a: 0th stiffness adjustment button switch
231b: 1st stiffness adjustment button switch
231c: 2nd stiffness adjustment button switch
231d: 3rd stiffness adjustment button switch
232: sliding cam
233: clutch unit on button
233': clutch unit on button switch
234: locking part
235: clutch unit off button
235': clutch unit off button switch
250: second fixing unit
252: gear train part
260: first fixing unit

270: ratchet gear
270': small actuator module for clutch operation
290: housing
310: stiffness adjustment button
320: clutch unit operation button
330: cable
330a: 1-1 cable
330b: 1-2 cable
330c: second cable
350: wire
400: first manipulation target unit
400': second manipulation target section
401: manipulation device
410: wire
420: actuator
500: wearer movement sensor user interface
500": wearer movement report user interface
500': wearer movement analysis user interface
501: waist bending angle measurement user interface
501': x-axis time y-axis waist bending angle graph user interface
502: waist twist angle measurement user interface
502': x-axis time y-axis waist twist angle graph user interface
503: waist lowering angle measurement user interface
510: wearer's waist L5/S1 joint
511: center of gravity of a wearer's upper body and a heavy object
512: muscle distance vector
520: wearer waist injury risk illustration user interface
521: user interface for providing wearer work pace information
522: user interface for providing wearer task balance information
523: user interface for providing information on a wearer's risk of a waist injury
530: user interface for providing information on the total number of daily movements of the wearer
531: user interface for providing wearer safety motion rate information
532: user interface for providing information on a wearer's daily load reduction amount
533: wearable robot wearing time information providing user interface
534: user interface for providing wearer daily motion safety score information
535: user interface for providing information on wearer's daily excessive waist bending rate
536: user interface for providing information on a wearer's daily prolonged waist bending rate
537: user interface for providing wearer daily side flexion rate information
538: user interface for providing wearer daily waist twist rate information

**Claims**

1. A wearable robot that assists waist muscular strength, comprising:

   an upper wearing unit worn on an upper body;
   a waist muscular strength assisting unit fixable to the upper wearing unit; and
   a lower wearing unit connected to the waist muscular strength assisting unit,
   wherein the waist muscular strength assisting unit comprises:

   a housing fixable to the upper wearing unit;
   a plurality of elastic members disposed in series or in parallel within the housing;
   a moving part connected to a lower portion of the elastic member and connected to the lower wearing unit to slide up and down; and
   a stiffness adjustment unit configured to adjust stiffness of the elastic member.

2. The wearable robot of claim 1, further comprising a clutch unit configured to limit a downward movement range of the moving part,

wherein the clutch unit comprises:

a wire extending in upper left and right directions by winding the moving part horizontally;
a first fixing unit configured to fix one end of the wire; and
a second fixing unit configured to wind and fix the other end of the wire in a circumferential direction and in which a reel spring is mounted on a rotation axis to rotate elastically.

3. The wearable robot of claim 1, wherein the plurality of elastic members of the waist muscular strength assisting unit comprise a first elastic member and a second elastic member, wherein an upper end of the first elastic member is fixed to the housing,

a lower end of the first elastic member is fixed to the slider,
an upper end of the second elastic member is fixed to the slider; and
a lower end of the second elastic member is fixed to the moving part.

4. The wearable robot of claim 3, wherein the second elastic member has an elastic modulus value greater than that of the first elastic member.

5. The wearable robot of claim 3, wherein a catching protrusion is formed on a top surface of the slider in a movement direction of the slider, and
the stiffness adjustment unit further comprises:

a sliding cam that moves horizontally from above the slider in the movement direction of the slider; and
a locking part configured to restrict or allow a movement of the slider by bringing into contact with or releasing contact with the catching protrusion depending on whether the locking part is brought into contact with the sliding cam when the sliding cam moves.

6. The wearable robot of claim 5, wherein the stiffness adjustment unit further comprises:

a cable connected to the slider; and
a manipulation device configured to move the slider by pulling or releasing the cable.

7. The wearable robot of claim 2, wherein the clutch manipulation unit comprises:

a gear train part in which gears are formed in the circumferential direction of the second fixing unit; and
a ratchet gear engaged with or disengaging from the gears of the gear train part by constraining or allowing a rotation of the second fixing unit.

8. The wearable robot of claim 7, wherein the clutch operating unit further comprises:

a cable connected to the ratchet gear; and
a manipulation device configured to move the ratchet gear by pulling or releasing the cable.

9. The wearable robot of claim 8, wherein a reel spring is mounted to a rotation axis of the first fixing unit so that the first fixing unit elastically rotates, and
the reel spring mounted to the first fixing unit has an elastic modulus value less than that of the reel spring mounted to the second fixing unit.

10. The wearable robot of claim 1, further comprising a posture recognition sensor built into the waist muscular strength assisting unit to measure one or more of a waist bending angle, a waist twisting angle, or a waist lowering angle of the wearer of the wearable robot.

11. The wearable robot of claim 10, wherein the posture recognition sensor is connected to a user device or a communication network by wire or wirelessly and transmits one or more of the measured waist bending angle, waist twisting angle, or waist lowering angle to a server.

12. A wearable robot that assists waist muscular strength, comprising:

an upper wearing unit worn on an upper body;
a waist muscular strength assisting unit connected to the upper wearing unit; and
a lower wearing unit connected to the waist muscular strength assisting unit,
wherein the waist muscular strength assisting unit comprises:

a wire;
a moving part connected to a lower end of the wire and connected to the lower wearing unit to slide up and down; and
an actuator configured to control a length of the wire to adjust a tension applied to the wire.

13. The wearable robot of claim 12, further comprising a posture recognition sensor built into the waist muscular strength assisting unit to measure one or more of a waist bending angle, a waist twisting angle, or a waist lowering angle of a wearer of the wearable robot.

14. The wearable robot of claim 13, wherein the posture recognition sensor is connected to a user device or a communication network by wire or wirelessly and transmits one or more of the measured waist bending angle, waist twisting angle, or waist lowering angle to a server.

15. A manipulation device of a wearable robot that assists waist muscular strength, which manipulates a first manipulation target unit and a second manipulation target unit, comprising,

a manipulation device housing;
a plurality of first cables each having one end connected to the first manipulation target unit and the other end fixed to the manipulation device housing;
a second cable having one end connected to the second manipulation target unit and the other end fixed to the manipulation device housing;
a stiffness adjustment button configured to pull or release the plurality of first cables connected to the first manipulation target unit; and
a clutch unit operation button configured to pull or release the second cable connected to the second manipulation target unit,
wherein the stiffness adjustment button comprises a pressing portion configured to press the plurality of first cables.

16. The manipulation device of claim 15, wherein the manipulation device housing comprises an upper support portion and a lower support portion disposed on the other side of the plurality of first cables to be spaced apart from each other in a longitudinal direction of the plurality of first cables with the pressing portion therebetween.

17. The manipulation device claim 16, wherein the stiffness adjustment button pressurizes at least one of the plurality of first cables.

18. The manipulation device of claim 17, further comprising a connecting bar hook,
wherein the connection bar hook restricts a position of the stiffness adjustment button at a position at which the stiffness adjustment button moves in a direction of pressing any one or more of the plurality of first cables.

19. The manipulation device of claim 18, wherein each of the stiffness adjustment button and the connecting bar hook is provided in plurality, and
the connecting bar hook is connected to and integrated with a connecting bar to move in a direction of releasing restraint at the same time by the stiffness adjustment button.

20. The manipulation device of claim 15 further comprising a manipulation lever that slides in a direction parallel to a longitudinal direction of the second cable,
wherein a position of the manipulation lever is restricted at a position at which the manipulation lever moves in a direction of pulling the second cable.

21. The manipulation device of claim 20, wherein the clutch unit operation button further comprises a clutch unit operation button hook configured to restrict a position of the operation lever at a position at which the manipulation lever moves in the direction of pulling the second cable.

**22.** The manipulation device of claim 21, wherein the clutch unit operation button further comprises a release button configured to move the clutch unit operation button hook in a direction of releasing restraint of the manipulation lever.

【Figure 1】

【Figure 2】

【Figure 3】

【Figure 4】

【Figure 5】

【Figure 6】

d:change in length
according to the motion
of bending waist

(a)

(b)

【Figure 7】

(a)                    (b)

d: change in length according to the motion of bending waist

【Figure 8】

d:change in length according to the motion of bending waist of bending waist

(a)           (b)

【Figure 9】

(a)                    (b)

【Figure 10】

【Figure 11】

【Figure 12】

(a)

(b)

(c)

(d)

【Figure 13】

(a)

(b)

【Figure 14】

d:change in length according to the motion of bending waist

(a)

(b)

【Figure 15】

330c

270

420

260

250

252

350

410

210

212

124

d:change in length
according to the motion
of bending waist

*280: 270,250,252
*390: 350,260,280

(a)

(b)

【Figure 16】

300

330c
330b
330a

320a
320b
} 320

340

300a

310a

0

310b

1

310c

2

310d

3

} 310

【Figure 17】

【Figure 18】

【Figure 19】

【Figure 20】

【Figure 21】

【Figure 22】

300

330a
330b

300a

340

371a

371b

371c

371d

310d

310d'    360

【Figure 23】

300

330c

330a
330b

300a

310a

371a

370

371b

310b

371c

310c

371d

310d

【Figure 24】

300

330c
330a
330b
300a
340
380
320b
320a
320

【Figure 25】

300

330c

330a

330b

300a

340

320a
320
320b

【Figure 26】

제1-1 cable(330a)
제1-2 cable(330b)

400 — | first manipulation target part |

| manipulation device | —401

400′ — | Second manipulation target part |

제2 cable(330c)

【Figure 27】

—110

200—

—201

【Figure 28】

【Figure 29】

【Figure 30】

500′

14:36

← WIBS

SENSOR      ANALYSIS      REPORT

500      500″

Motion Analysis

520

521

Pace:          240 Lifts / Hour

Symmetry:          4 / 6          522

LBD Risk:          73%          523

【Figure 31】

500′

14:36

← WIBS

SENSOR    ANALYSIS    REPORT — 500″

500 —

Counts of Lifts:    1,186 — 530
Safe Lift Portion:    64% — 531
Offloaded Amount:    7,875 kg — 532
Hours Worn:    4.3 Hrs — 533

Lift Safety Score:    52 — 534

Excessive Flexion
65% [////] 35% — 535

Prolonged Bending
<1.0 sec 70% [////] 30% 1.0+ sec — 536

Side Bending:
80% [////] 20% — 537

Twisting:
40% [////] 60% — 538

【Figure 32】

【Figure 33】

【Figure 34】